(19) Europäisches Patentamt
European Patent Office
Office européen des brevets

(11) EP 3 757 082 B1

(12) # EUROPEAN PATENT SPECIFICATION

(45) Date of publication and mention of the grant of the patent:
**01.05.2024 Bulletin 2024/18**

(21) Application number: **19757061.7**

(22) Date of filing: **22.02.2019**

(51) International Patent Classification (IPC):
***B60K 35/00*** (2024.01) ***G02B 5/26*** (2006.01)
***B32B 17/10*** (2006.01) ***G02B 27/01*** (2006.01)
***G02B 5/20*** (2006.01) ***G02B 5/30*** (2006.01)

(52) Cooperative Patent Classification (CPC):
**G02B 5/3083; B32B 17/10036; B32B 17/10458; B32B 17/10623; B32B 17/10761; B32B 17/10788; B60K 35/00; G02B 5/26; G02B 27/0101;**
B32B 2264/1021; B32B 2307/416; B60K 2360/25; B60K 2360/27; B60K 2360/66; G02B 5/3016;

(Cont.)

(86) International application number:
**PCT/JP2019/006903**

(87) International publication number:
**WO 2019/163969 (29.08.2019 Gazette 2019/35)**

(54) **METHOD FOR MANUFACTURING LAMINATED GLASS FOR DISPLAYING IMAGE, LAMINATED GLASS FOR DISPLAYING IMAGE, AND IMAGE DISPLAY SYSTEM**

VERFAHREN ZUR HERSTELLUNG VON VERBUNDGLAS FÜR BILDANZEIGE, VERBUNDGLAS FÜR BILDANZEIGE UND BILDANZEIGESYSTEM

PROCÉDÉ DE FABRICATION DE VERRE FEUILLETÉ POUR AFFICHAGE D’UNE IMAGE, VERRE FEUILLETÉ POUR L’AFFICHAGE D’UNE IMAGE ET SYSTÈME D’AFFICHAGE D’IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2018 JP 2018031232**
**27.03.2018 JP 2018060872**

(43) Date of publication of application:
**30.12.2020 Bulletin 2020/53**

(73) Proprietor: **FUJIFILM Corporation**
**Tokyo 106-8620 (JP)**

(72) Inventors:
- **OTANI, Taketo**
**Minami-ashigara-shi, Kanagawa 250-0193 (JP)**
- **YANAI, Yujiro**
**Minami-ashigara-shi, Kanagawa 250-0193 (JP)**
- **MAJIMA, Wataru**
**Minami-ashigara-shi, Kanagawa 250-0193 (JP)**
- **INOUE, Rikio**
**Minami-ashigara-shi, Kanagawa 250-0193 (JP)**

(74) Representative: **Klunker IP Patentanwälte PartG mbB**
**Destouchesstraße 68**
**80796 München (DE)**

(56) References cited:
**EP-A1- 1 804 111**
**WO-A1-2016/121559**
**WO-A1-2016/133187**
**JP-A- 2007 290 549**
**JP-A- 2016 204 249**
**JP-A- 2017 122 022**
**US-A- 4 093 438**
**US-A1- 2016 257 095**
**US-A1- 2017 192 231**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **SZABO J ET AL: "MAKYOH TOPOGRAPHY: CURVATURE MEASUREMENTS AND IMPLICATIONS FOR THE IMAGE FORMATION", JAPANESE JOURNAL OF APPLIED PHYSICS, JAPAN SOCIETY OF APPLIED PHYSICS, JP, vol. 35, PART 02, no. 2B, 15 February 1996 (1996-02-15), pages L258-L261, XP000730566, ISSN: 0021-4922, DOI: 10.1143/JJAP.35.L258**

(52) Cooperative Patent Classification (CPC): (Cont.)
G02B 2027/0121; G02B 2027/0194

## Description

### BACKGROUND OF THE INVENTION

1. Field of the Invention

The present invention relates to a method for producing a screen image-displaying laminated glass, a screen image-displaying laminated glass, and a screen image display system including the screen image-displaying laminated glass.

2. Description of the Related Art

A laminated glass can be used as a projection image-displaying member of a head-up display system by incorporating a half-mirror film into a laminated glass used as a windshield or the like for automobiles.

WO2016/052367A (US 2017/0192231 A1) discloses that a half-mirror film including a retardation layer and a plurality of cholesteric liquid crystal layers is used as a projection image-displaying member. WO2016/052367A further discloses that a laminated glass-type windshield glass constituting a head-up display system has an interlayer between two glass plates, and a half-mirror film including a retardation layer and a plurality of cholesteric liquid crystal layers is disposed in at least part of the interlayer. In general, the laminated glass has an intermediate film between two glass plates.

### SUMMARY OF THE INVENTION

According to the projection image-displaying member (windshield glass) disclosed in WO2016/052367A, good characteristics such as no double image, high transmittance, and high reflectivity (high luminance of a display image) are achieved in the head-up display system.

As a result of studies conducted by the present inventors, however, it has been found for the projection image-displaying member disclosed in WO2016/052367A that in particular, when a projected display image includes a linear shape, the distortion of a display image tends to become obvious. This distortion of a display image deteriorates the image quality and adversely affects the visibility.

US 2016/0257095 A1 discloses a glass laminate structure comprising a non-strengthened glass sheet, a strengthened glass sheet and at least one polymer interlayer intermediate the non-strengthened and the strengthened glass sheets. Gorilla® Glass can be used as the strengthened internal glass sheet. Such glass sheets do not suffer from the draw line appearance that can cause ghost images.

It is an object of the present invention to provide a screen image-displaying laminated glass that reduces the distortion of a projected display image, a method for producing the screen image-displaying laminated glass, and a screen image display system that includes the screen image-displaying laminated glass and that reduces the distortion of a projected display image.

As a result of thorough studies, the present inventors have found that a screen image-displaying laminated glass produced by selecting the optimum arrangement of the first glass plate, the second glass plate, and the transparent support of the half-mirror film can reduce the distortion of a projected display image.

The distortion that is a problem solved by the present invention is normally not visually recognized in a laminated glass not including a projection image-displaying system regardless of the directions of glass plates and a transparent support. This problem arises for the first time when a screen image is displayed.

That is, the present inventors have found that the above object can be achieved by the configuration disclosed herein, i.e. the method for producing a screen image-displaying laminated glass as claimed in claim 1, the screen image-displaying laminated glass as claimed in claim 6 and the screen image display system as claimed in claim 11. Embodiments of the invention are claimed in the respective dependent claims.

According to the present invention, there can be provided a screen image-displaying laminated glass that reduces the distortion of a projected display image, a method for producing the screen image-displaying laminated glass, and a screen image display system that includes the screen image-displaying laminated glass and that reduces the distortion of a projected display image.

### BRIEF DESCRIPTION OF THE DRAWINGS

Fig. 1 conceptually illustrates an example of a screen image-displaying laminated glass according to an embodiment of the present invention;

Fig. 2 conceptually illustrates the situation of visual recognition in the case where a screen image is projected on the screen image-displaying laminated glass illustrated in Fig. 1;
Fig. 3 includes images and graphs illustrating examples of the measurement results by a magic mirror method;
Fig. 4 is a conceptual diagram for describing the display of a screen image with a known screen image-displaying laminated glass;
Fig. 5 is a conceptual diagram for describing a method for evaluating the distortion of a screen image in Examples; and
Fig. 6 is a diagram for describing an example of a method for determining longitudinal directions of bright and dark lines by a magic mirror method.

## DESCRIPTION OF THE PREFERRED EMBODIMENTS

In this specification, numerical values before and after "to" are inclusive as the lower limit and the upper limit.

In this specification, the angle (e.g., an angle of "90°") and its relations (e.g., "parallel", "horizontal", and "vertical") include a margin of error tolerable in the technical field to which the present invention pertains. For example, the margin of error refers to a precise angle ± less than 10°, which is preferably 5° or less and more preferably 3° or less.

In this specification, the term "selective" in circular polarization means that the amount of one of a right circularly polarized component and a left circularly polarized component of light is larger than the amount of the other. Specifically, when the term "selective" is used, the degree of circular polarization of light is preferably 0.3 or more, more preferably 0.6 or more, and further preferably 0.8 or more. More preferably, the degree of circular polarization of light is substantially 1.0. Herein, the degree of circular polarization is expressed by $|I_R - I_L|/(I_R + I_L)$, where $I_R$ represents an intensity of a right circularly polarized component of light and $I_L$ represents an intensity of a left circularly polarized component of light.

In this specification, the term "sense" in circular polarization means that the circular polarization is right circular polarization or left circular polarization. The sense of circular polarization is defined as follows. In the case where light is viewed such that it travels toward the viewer, when the end point of an electric field vector circulates clockwise with increasing time, the circular polarization is right circular polarization. When the end point circulates counterclockwise, the circular polarization is left circular polarization.

In this specification, the term "sense" may be used for the twisted direction of the helix of a cholesteric liquid crystal. When the twisted direction (sense) of the helix of a cholesteric liquid crystal is right, right circularly polarized light is reflected and left circularly polarized light is transmitted. When the sense is left, left circularly polarized light is reflected and right circularly polarized light is transmitted.

In this specification, the term "light" refers to light satisfying both visible light and natural light (unpolarized light) unless otherwise specified. Among electromagnetic waves, visible light is light that has wavelengths visible to the human eye and normally has wavelengths of 380 to 780 nm.

In this specification, the "reflected light" or "transmitted light" simply mentioned includes scattered light and diffracted light.

The polarization state of light at each wavelength can be measured with a spectroradiometer or spectrometer equipped with a circularly polarizing plate. In this case, the light intensity measured through a right circularly polarizing plate corresponds to $I_R$ and the light intensity measured through a left circularly polarizing plate corresponds to $I_L$. The measurement can also be performed while a circularly polarizing plate is attached to an illuminometer or a spectrophotometer. A right circularly polarizing plate is attached and the right circular polarization amount is measured. A left circularly polarizing plate is attached and the left circular polarization amount is measured. Thus, the ratio can be measured.

In this specification, the p-polarized light refers to polarized light that oscillates in a direction parallel to the incidence plane of light. The incidence plane is a plane that is perpendicular to the reflection plane (e.g., windshield glass surface) and that includes incident light and reflected light. In the p-polarized light, the oscillation plane of an electric field vector is parallel to the incidence plane.

In this specification, the front retardation is measured using an AxoScan manufactured by Axometrics. The measurement wavelength is set to 550 nm unless otherwise specified.

In this specification, the term "projection image" refers to an image based on the projection of light from a projector used, but not a surrounding view such as a front view. The projection image is observed as a virtual image that emerges in an area ahead of a projection image-displaying section of a windshield glass when viewed from a viewer.

In this specification, the term "screen image" refers to an image displayed on a screen image display device (imager) or an image drawn on, for example, an intermediate image screen by the screen image display device. As opposed to the virtual image, the screen image is a real image.

Each of the screen image and the projection image may be a monochrome image, a multicolored image with two or more colors, or a full-color image.

In this specification, the term "visible light transmittance" refers to a transmittance of visible light from an A light source, which is defined in JIS R 3212:2015 (Test methods of safety glazing materials for road vehicles). That is, the

visible light transmittance is a transmittance determined by measuring the transmittance at each wavelength of 380 to 780 nm with a spectrophotometer using an A light source and multiplying the transmittance at each wavelength by the weighting function obtained from the wavelength distribution and wavelength interval of the CIE (International Commission on Illumination) photopic luminous efficiency function to calculate a weighted average.

In this specification, the liquid crystal composition and the liquid crystal compound conceptually include compositions and compounds that do not exhibit liquid crystallinity as a result of curing or the like.

The present invention provides a screen image-displaying laminated glass having a half-mirror film having a transparent support and a selectively reflecting layer that wavelength-selectively reflects light, a first glass plate disposed on one surface of the half-mirror film, and a second glass plate disposed on the other surface of the half-mirror film, a method for producing the screen image-displaying laminated glass, and a screen image display system, such as a head-up display system, that includes the screen image-displaying laminated glass.

In the description below, the head-up display system is also referred to as an "HUD system". The HUD is an abbreviation of "head-up display".

Fig. 1 conceptually illustrates an example of a screen image-displaying laminated glass according to an embodiment of the present invention.

A screen image-displaying laminated glass 10 illustrated in Fig. 1 is produced by a method for producing a screen image-displaying laminated glass according to an embodiment of the present invention and has a first glass plate 12, a heat sealing layer 14, a transparent support 16, a retardation layer 18, a selectively reflecting layer 20, an intermediate film 24, and a second glass plate 26 from the bottom in the drawing.

In the illustrated screen image-displaying laminated glass 10, the heat sealing layer 14, the transparent support 16, the retardation layer 18, and the selectively reflecting layer 20 constitute a half-mirror film according to an embodiment of the present invention.

The screen image-displaying laminated glass 10 according to an embodiment of the present invention is used as an example for the screen image display system according to an embodiment of the present invention. When a display image displayed by a screen image display device 30 is projected, the display image is reflected by the selectively reflecting layer 20 and observed by a user O as conceptually illustrated in Fig. 2.

In the screen image-displaying laminated glass according to an embodiment of the present invention, the first glass plate, the second glass plate, and the transparent support are arranged so that the longitudinal directions of bright and dark lines observed by a magic mirror method match each other at the first glass plate 12, the second glass plate 26, and the transparent support 16.

That is, in the method for producing a screen image-displaying laminated glass according to an embodiment of the present invention, the bright and dark lines of the first glass plate 12, the second glass plate 26, and the transparent support 16 are extracted by a magic mirror method to detect the longitudinal directions, and members constituting the screen image-displaying laminated glass are laminated and bonded to each other so that the longitudinal directions of the bright and dark lines of the first glass plate 12, the second glass plate 26, and the transparent support 16 match each other, thereby producing the screen image-displaying laminated glass according to an embodiment of the present invention.

In the present invention, the phrase "the longitudinal directions of bright and dark lines match each other" means that the angle between two longitudinal directions is 15° or less. Therefore, in the present invention, the angle between the longitudinal direction of the bright and dark lines of the first glass plate observed by a magic mirror method, the longitudinal direction of the bright and dark lines of the second glass plate observed by a magic mirror method, and the longitudinal direction of the bright and dark lines of the transparent support observed by a magic mirror method is 15° or less in all the combinations of the three longitudinal directions. In other words, the largest angle between two longitudinal directions among the three longitudinal directions is 15° or less. The largest angle between two longitudinal directions among the three longitudinal directions is preferably as small as possible, and is preferably 10° or less and more preferably 5° or less.

The basic principle of the magic mirror method will be described.

The magic mirror method is a method in which parallel light is caused to enter an object and the surface properties of the object are detected from the reflected light or the transmitted light.

Specifically, parallel light emitted from a light source is caused to enter an object and reflected by the object to obtain reflected light. Alternatively, the parallel light is caused to enter an object and transmitted through the object to obtain transmitted light. This reflected light or the transmitted light is projected on an image receiving surface. If the object has irregularities, a bright and dark pattern is formed on the projection image of the image receiving surface. For example, in the case of transmitted light, if the surface of the object has concave sections, light is diffused and the projection image at the concave sections becomes dark. If the surface has convex sections, light is condensed and the projection image at the convex sections becomes bright. In the case of reflected light, the bright and dark pattern is opposite.

That is, when a completely flat object is irradiated with parallel light emitted from a light source of a magic mirror

device, the bright and dark contrast is not observed on the projection image projected on the light receiving surface of the magic mirror device. However, when a substantially flat object has small irregularities on its surface, the reflected light or the transmitted light is affected by the irregularities and observed as a projection image having bright portions and dark portions.

The magic mirror method in which small irregularities of a substantially flat object are detected as a bright and dark contrast can be performed by using a commercially available magic mirror device. An example of the commercially available magic mirror device is MIS-3000 manufactured by Kobelco Research Institute, Inc.

The first glass plate, the second glass plate, and the transparent support that constitute the screen image-displaying laminated glass and the method for producing a screen image-displaying laminated glass according to embodiments of the present invention are each produced by a continuous production method. They are usually a plate-shaped member or a film-shaped member having a longitudinal direction for industrial use.

Such a long plate-shaped member or film-shaped member has good smoothness in a longitudinal direction or has good smoothness in a transverse direction orthogonal to the longitudinal direction. That is, such a long plate-shaped member or film-shaped member has flatness in one direction and irregularities in a direction orthogonal to the one direction.

Therefore, such a long plate-shaped member or film-shaped member has anisotropy between the longitudinal direction and the transverse direction in terms of surface properties. The projection image formed by a magic mirror method is a striped projection image alternately having long bright lines and long dark lines in one direction.

Fig. 3 illustrates an example of a projection image on a glass plate by a magic mirror method using transmitted light.

As illustrated in Fig. 3, bright and dark lines are observed in the projection image on the glass plate by a magic mirror method. As illustrated in the left drawing in Fig. 3, when the luminance in a vertical direction that is the longitudinal direction of the bright and dark lines is integrated in a freely set square, the integrated value minutely varies in the horizontal direction as illustrated in the lower left graph in Fig. 3.

On the other hand, when the projection image is rotated 90° and the luminance in a vertical direction that is a direction orthogonal to the longitudinal direction of the bright and dark lines is similarly integrated as illustrated in the right drawing in Fig. 3, the variation in the integrated value is small in the horizontal direction as illustrated in the lower right graph in Fig. 3.

In the graph in Fig. 3, a large variation (curve) in the integrated value of luminance in the horizontal direction results from the luminance distribution of an optical system of the magic mirror device. Fig. 3 illustrates the result obtained after image processing with image analysis software "Image J".

Therefore, by detecting such a variation in the integrated value, it can be confirmed that the plate-shaped member or the film-shaped member has anisotropy between the longitudinal direction and the transverse direction in terms of surface properties.

As illustrated in Fig. 6, a square is freely set in the projection image (magic mirror image) on a glass plate or the like obtained by a magic mirror method, the magic mirror image is rotated about the center of the square (upper part in Fig. 6), and the image in the square is subjected to two-dimensional Fourier transform (FFT) using the image analysis software "Image J". Consequently, a bright pattern appears in a direction orthogonal to a direction that is presumably the longitudinal direction of the bright and dark lines. In the present invention, when the longitudinal direction of bright and dark lines observed by a magic mirror method is unclear, luminance data is obtained from an image subjected to two-dimensional Fourier transform, and the direction orthogonal to the line (broken line) obtained by connecting the brightest points can be defined as a longitudinal direction of bright and dark lines.

The present inventors have found that the distortion of image display for concern can be reduced by matching the directions in which the first glass plate 12, the second glass plate 26, and the transparent support 16 that constitute the screen image-displaying laminated glass 10 have good smoothness. The directions in which the first glass plate 12, the second glass plate 26, and the transparent support 16 have good smoothness are the same as the longitudinal directions of bright and dark lines obtained by a magic mirror method.

More specifically, the longitudinal directions of the bright and dark lines obtained by a magic mirror method match each other at the first glass plate 12, the second glass plate 26, and the transparent support 16 in the screen image-displaying laminated glass 10. Furthermore, the matched longitudinal directions are allowed to be parallel with a plane formed by emitted light of a display image from the screen image display device 30 and reflected light of a display image regularly reflected by the screen image-displaying laminated glass 10 in the screen image display system. This can optimally reduce the distortion of a projected display image. The emitted light from the display device 30 refers to light incident on the screen image-displaying laminated glass 10 from the screen image display device 30.

In the description below, the plane formed by emitted light from the screen image display device 30 and reflected light subjected to regular reflection at the screen image-displaying laminated glass 10 in the screen image display system is also referred to as an incidence plane.

The phrase "the matched longitudinal directions of the bright and dark lines obtained by a magic mirror method

are parallel with an incidence plane" means that the largest angle between the incidence plane and the longitudinal directions of the bright and dark lines at the first glass plate 12, the second glass plate 26, and the transparent support 16 is 15° or less. The angle between the longitudinal directions of the bright and dark lines and the incidence plane is preferably as small as possible, and is preferably 10° or less and more preferably 5° or less.

The selectively reflecting layer 20 is formed on the transparent support 16 by a coating method. The screen image-displaying laminated glass 10 is produced by sandwiching a half-mirror film including the selectively reflecting layer 20 between the first glass plate 12 and the second glass plate 26 and performing pressure bonding.

Therefore, when the first glass plate 12, the second glass plate 26, and the transparent support 16 have irregularities, the irregularities are transferred to the selectively reflecting layer 20.

Herein, the first glass plate 12, the second glass plate 26, and the transparent support 16 have good smoothness, for example, in one direction such as a longitudinal direction during production and have irregularities in a direction orthogonal to the one direction. The directions with good smoothness are the same as the longitudinal directions of bright and dark lines obtained by a magic mirror method.

Therefore, the directions in which irregularities are transferred to the selectively reflecting layer 20 from the first glass plate 12, the second glass plate 26, and the transparent support 16 can be matched by matching the longitudinal directions of the bright and dark lines obtained by a magic mirror method at the first glass plate 12, the second glass plate 26, and the transparent support 16. As a result, the directions with good smoothness and the directions with irregularities can be adjusted to one direction.

In the case where the incidence plane is not parallel with the longitudinal directions of the bright and dark lines obtained by a magic mirror method in the HUD system, that is, in the case where the incidence plane is not parallel with the longitudinal direction of the irregularities of the selectively reflecting layer 20, the projected display image is distorted. In particular, when a linear shape is included in the projected display image, the distortion of the display image tends to becomes obvious.

For example, the case where the matched longitudinal directions of the bright and dark lines obtained by a magic mirror method at the first glass plate 12, the second glass plate 26, and the transparent support 16 are orthogonal to the incidence plane as conceptually illustrated in Fig. 4, that is, the case where the longitudinal direction of the irregularities of the selectively reflecting layer 20 is orthogonal to the incidence plane will be described. In Fig. 4, the incidence plane, that is, the plane formed by emitted light from the screen image display device 30 and reflected light provided by the screen image-displaying laminated glass is a plane parallel with the drawing plane in Fig. 4.

In the case illustrated in Fig. 4, the longitudinal direction of the irregularities of the selectively reflecting layer 20 is orthogonal to the incidence plane. That is, the selectively reflecting layer 20 has irregularities in an incident direction of the display image, that is, in a direction in which emitted light travels from the screen image display device 30. Therefore, the emitted light of the display image from the screen image display device 30 is reflected in a different direction in accordance with the incidence position on the selectively reflecting layer 20 by being affected by the irregularities of the selectively reflecting layer 20. As a result, the projected display image is probably distorted as described above.

In contrast, when the matched longitudinal directions of the bright and dark lines obtained by a magic mirror method at the first glass plate 12, the second glass plate 26, and the transparent support 16 are parallel with the incidence plane, that is, when the longitudinal direction of the irregularities of the selectively reflecting layer 20 is parallel with the incidence plane, the selectively reflecting layer 20 is flat in the incident direction of the display image, that is, in the direction in which emitted light from the image display device 30 travels. Therefore, emitted light of the display image from the screen image display device 30 is not subjected to irregular reflection illustrated in Fig. 4, and the emitted light of the display image is reflected in the same direction. Thus, a high-quality projection image without distortion can be probably displayed.

In the method for producing a screen image-displaying laminated glass according to an embodiment of the present invention, the direction in which the first glass plate 12, the second glass plate 26, and the transparent support 16 have good smoothness is identified by a magic mirror method, and the screen image-displaying laminated glass is produced by forming a laminated body in which the longitudinal directions of the bright and dark lines obtained by a magic mirror method are matched at the first glass plate 12, the second glass plate 26, and the transparent support 16 and by pressure-bonding the laminated body.

Therefore, the production method according to an embodiment of the present invention may include, in the production process of laminated glass, a step of identifying a direction with good smoothness by a magic mirror method. If the direction with good smoothness has been identified by a magic mirror method in advance, the magic mirror method is not required in the production process of laminated glass.

Hereafter, constituent elements of the screen image-displaying laminated glass according to an embodiment of the present invention, that is, each of members used in the method for producing a screen image-displaying laminated glass will be described. Half-mirror film

In this specification, the half-mirror film refers to a half mirror that can display a projection image using reflected light.

In the screen image-displaying laminated glass and the production method according to embodiments of the present invention, the half-mirror film has a transparent support and a selectively reflecting layer that wavelength-selectively reflects light.

The half-mirror film used in the present invention has a visible light-transmitting property. Specifically, the visible light transmittance of the half-mirror film used in the present invention is preferably 79% or more, more preferably 81% or more, and further preferably 82% or more. Even if the half-mirror film is combined with a glass having a low visible light transmittance to form a screen image-displaying laminated glass, a visible light transmittance that meets the standards of a windshield glass for vehicles can be achieved when the half-mirror film has such a high visible light transmittance.

The half-mirror film used in the present invention preferably does not exhibit substantial reflection in a wavelength range with high luminosity.

Specifically, a typical laminated glass and a laminated glass incorporating the half mirror used in the present invention preferably exhibit substantially the same reflection of light in the normal direction at a wavelength of near 550 nm. They more preferably exhibit substantially the same reflection in a visible light wavelength range of 490 to 620 nm. The term "substantially the same reflection" means that, for example, the difference in reflectivity of natural light (unpolarized light) measured in the normal direction at the target wavelength using a spectrophotometer such as a spectrophotometer "V-670" manufactured by JASCO Corporation is 10% or less.

In the above wavelength range, the difference in reflectivity is preferably 5% or less, more preferably 3% or less, further preferably 2% or less, and particularly preferably 1% or less. Even if the half-mirror film is combined with a glass having a low visible light transmittance to form a laminated glass, a visible light transmittance that meets the standards of a windshield glass for vehicles can be achieved when substantially the same reflection is exhibited in a wavelength range with high luminosity.

The half-mirror film may be, for example, a thin film-shaped member or a sheet-shaped member.

The half-mirror film may be, for example, a rolled thin film before used for a screen image-displaying laminated glass.

It is sufficient that the half-mirror film has a function as a half mirror for at least part of projected light. For example, the half-mirror film does not necessarily function as a half mirror for light in the entire visible light range. The half-mirror film may have the above-described function as a half mirror for light with all incidence angles, but it is sufficient that the half-mirror film has the above-described function for light with at least some of incidence angles.

In the present invention, the half-mirror film includes a transparent support and a selectively reflecting layer. The half-mirror film may include, for example, a retardation layer, an alignment layer, an adhesive layer, and a heat sealing layer in addition to the transparent support and the selectively reflecting layer.

Selectively reflecting layer

The selectively reflecting layer is a layer that wavelength-selectively reflects light. The selectively reflecting layer preferably exhibits selective reflection in part of the visible light wavelength range. It is sufficient that the selectively reflecting layer reflects light for displaying a projection image.

In the half-mirror film used in the present invention, the selective reflection center wavelength of a selectively reflecting layer having a shortest selective reflection center wavelength is preferably 650 to 780 nm. In this specification, the selective reflection center wavelength $\lambda$ of the selectively reflecting layer refers to a wavelength at the barycentric position of the reflection peak in a reflection spectrum measured in a direction normal to the selectively reflecting layer.

Such a configuration can be achieved, for example, when the half-mirror film includes a selectively reflecting layer having a selective reflection center wavelength of 650 to 780 nm and does not include a selectively reflecting layer having a selective reflection center wavelength in a visible light wavelength range of less than 650 nm.

In the half-mirror film used in the present invention, the selective reflection center wavelength of a selectively reflecting layer having a shortest selective reflection center wavelength is preferably 750 nm or less, more preferably 720 nm or less, and further preferably 700 nm or less.

The half-mirror film used in the present invention may have only one selectively reflecting layer or may include two or more selectively reflecting layers.

The two or more selectively reflecting layers may have the same selective reflection center wavelength or different selective reflection center wavelengths, and preferably have different selective reflection center wavelengths. When two or more selectively reflecting layers having different selective reflection center wavelengths are included, formation of double images can be suppressed. For example, when two selectively reflecting layers are included, the difference in selective reflection center wavelength between the two layers is preferably 60 nm or more, more preferably 80 nm or more, and further preferably 100 nm or more. All the two or more selectively reflecting layers may have a selective reflection center wavelength of 650 to 780 nm. At least one of the selectively reflecting layers may have a selective reflection center wavelength of 650 to 780 nm and the other may have a selective reflection center wavelength of more than 780 nm. Preferably, all the two or more selectively reflecting layers have a selective reflection center

wavelength of 650 to 780 nm.

For example, the half-mirror film may have only a selectively reflecting layer that selectively reflects red light, only a selectively reflecting layer that selectively reflects green light, or only a selectively reflecting layer that selectively reflects blue light.

The half-mirror film may have a selectively reflecting layer that selectively reflects red light, a selectively reflecting layer that selectively reflects green light, and a selectively reflecting layer that selectively reflects blue light.

The half-mirror film may have a selectively reflecting layer that selectively reflects red light and a selectively reflecting layer that selectively reflects green light.

The half-mirror film may have a selectively reflecting layer that selectively reflects red light and a selectively reflecting layer that selectively reflects blue light.

The half-mirror film may have a selectively reflecting layer that selectively reflects green light and a selectively reflecting layer that selectively reflects blue light.

The selectively reflecting layer is preferably a polarized light reflection layer. The polarized light reflection layer is a layer that selectively reflects linearly polarized light, circularly polarized light, or elliptically polarized light.

The polarized light reflection layer is preferably a circularly polarized light reflection layer or a linearly polarized light reflection layer. The circularly polarized light reflection layer is a layer that reflects circularly polarized light having one sense and transmits circularly polarized light having the other sense at the selective reflection center wavelength.

The linearly polarized light reflection layer is a layer that reflects linearly polarized light in one polarization direction and transmits linearly polarized light in a polarization direction orthogonal to the above polarization direction at the selective reflection center wavelength.

The polarized light reflection layer can transmit polarized light not subjected to reflection and can also partly transmit light in the wavelength range in which the selectively reflecting layer exhibits reflection. Therefore, the polarized light reflection layer is preferred because the deterioration of tint of light that has passed through the half-mirror film is suppressed and a decrease in visible light transmittance is also suppressed.

The selectively reflecting layer serving as a circularly polarized light reflection layer is preferably a cholesteric liquid crystal layer.

Cholesteric liquid crystal layer

In this specification, the cholesteric liquid crystal layer refers to a layer in which a cholesteric liquid crystal phase is fixed.

The cholesteric liquid crystal layer may be any layer as long as the alignment of a liquid crystal compound in the state of a cholesteric liquid crystalline phase is maintained. Typically, the cholesteric liquid crystal layer may be any layer as long as the polymerizable liquid crystal compound is brought into the alignment state of a cholesteric liquid crystal phase and polymerized and cured by, for example, ultraviolet irradiation or heating to form a layer which has no fluidity and also whose alignment state is not changed by an external field or an external force.

In the cholesteric liquid crystal layer, the liquid crystal compound in the layer does not necessarily exhibit liquid crystallinity as long as the optical properties of the cholesteric liquid crystal phase are maintained in the layer. For example, the polymerizable liquid crystal compound may lose its liquid crystallinity as a result of an increase in the molecular weight due to curing reaction.

The cholesteric liquid crystal layer is known to exhibit circularly polarized light selective reflection, that is, to selectively reflect circularly polarized light having one sense, either right circularly polarized light or left circularly polarized light, and selectively transmit circularly polarized light having the other sense.

Many films formed of compositions including polymerizable liquid crystal compounds have been known as films that exhibit circularly polarized light selective reflection and include layers in which the cholesteric liquid crystal phase is fixed. The cholesteric liquid crystal layer can be found in the related art.

The selective reflection center wavelength $\lambda$ of the cholesteric liquid crystal layer is dependent on the pitch P (= helical period) of the helical structure in a cholesteric phase and satisfies the formula $\lambda = n \times P$, where n represents an average refractive index of the cholesteric liquid crystal layer. As is clear from the above formula, the selective reflection center wavelength can be controlled to 650 to 780 nm by adjusting the n value and the P value.

The selective reflection center wavelength and the half-width of the cholesteric liquid crystal layer can be determined as follows.

When the transmission spectrum (the spectrum measured in a direction normal to the cholesteric liquid crystal layer) of the cholesteric liquid crystal layer is measured using a spectrophotometer UV3150 (manufactured by SHIMADZU Corporation), a peak having a decreased transmittance is observed in the selective reflection region. Of two wavelengths at the minimum transmittance of this peak and the intermediate (average) transmittance between the minimum transmittance and the transmittance of a peak whose transmittance is not decreased, when the shorter wavelength is defined as $\lambda_l$ (nm) and the longer wavelength is defined as $\lambda_h$ (nm), the selective reflection center wavelength $\lambda$ and the half-

width $\Delta\lambda$ can be expressed by the following formula.

$$\lambda = (\lambda_l + \lambda_h)/2$$

$$\Delta\lambda = (\lambda_h - \lambda_l)$$

The selective reflection center wavelength determined as described above is substantially equal to the wavelength at the barycentric position of the reflection peak of the circularly polarized light reflection spectrum measured in a direction normal to the cholesteric liquid crystal layer.

As described later, in the HUD system, the reflectivity at the surface of a glass plate on the projection light incidence side can be decreased by using the HUD system so that light obliquely enters the windshield glass. At this time, the light also obliquely enters the cholesteric liquid crystal layer.

For example, light that is incident at an angle of 45° to 70° relative to the normal line of the projection image-displaying section in the air having a refractive index of 1 passes through a cholesteric liquid crystal layer having a refractive index of about 1.61 at an angle of about 26° to 36°. In this case, the reflection wavelength shifts to shorter wavelengths. When light beams pass through a cholesteric liquid crystal layer in which the selective reflection center wavelength is $\lambda$ at an angle $\theta_2$ with respect to the direction normal to the cholesteric liquid crystal layer (the helical axis direction of the cholesteric liquid crystal layer), the selective reflection center wavelength $\lambda_d$ is expressed by formula below.

$$\lambda_d = \lambda \times \cos\theta_2$$

Therefore, when the angle $\theta_2$ is 26° to 36°, the cholesteric liquid crystal layer having a selective reflection center wavelength in the range of 650 to 780 nm can reflect projection light in the range of 520 to 695 nm.

Such a wavelength range is a wavelength range with high luminosity and thus highly contributes to the luminance of the projection image, which can provide a projection image with high luminance.

The pitch of the cholesteric liquid crystal phase is dependent on the type of chiral agent used together with the polymerizable liquid crystal compound and the concentration of the chiral agent added. Therefore, a desired pitch can be achieved by controlling the type and the concentration. The sense and pitch of a helix can be measured by the methods described in p. 46 of "Ekisho Kagaku Jikken Nyumon (Introduction of Liquid Crystal Chemical Experiments)" edited by The Japanese Liquid Crystal Society, published by SIGMA SHUPPAN, 2007 and p. 196 of "Handbook of Liquid Crystals" edited by the Editorial Board of the Handbook of Liquid Crystals, published by Maruzen Co., Ltd.

In the half-mirror film, cholesteric liquid crystal layers are preferably disposed in the order of layers having a shorter selective reflection center wavelength from the viewer side (from the inside of a car).

Each of the cholesteric liquid crystal layers is a cholesteric liquid crystal layer whose helical sense is right or left. The sense of circularly polarized light reflected by the cholesteric liquid crystal layer matches the helical sense. The cholesteric liquid crystal layers having different selective reflection center wavelengths may have the same helical sense or different helical senses, and preferably have the same helical sense.

The half-mirror film preferably does not include cholesteric liquid crystal layers having different helical senses as cholesteric liquid crystal layers that exhibit selective reflection in the same or overlapping wavelength range. The reason for this is to avoid a decrease in transmittance to, for example, less than 50% in a particular wavelength range.

The half-width $\Delta\lambda$ (nm) of a selective reflection band in which selective reflection is exhibited is dependent on the birefringence $\Delta n$ of the liquid crystal compound and the above-described pitch P and satisfies $\Delta\lambda = \Delta n \times P$. Therefore, the width of the selective reflection band can be controlled by adjusting $\Delta n$. The adjustment of $\Delta n$ can be performed by adjusting the types or mixing ratio of polymerizable liquid crystal compounds or by controlling the temperature at which the alignment is fixed.

To form a single type of cholesteric liquid crystal layer having the same selective reflection center wavelength, a plurality of cholesteric liquid crystal layers having the same pitch P and the same helical sense may be laminated. By laminating cholesteric liquid crystal layers having the same pitch P and the same helical sense, the selectivity of circularly polarized light at a particular wavelength can be increased.

When a plurality of cholesteric liquid crystal layers are laminated, separately formed cholesteric liquid crystal layers may be laminated using an adhesive or the like or a liquid crystal composition including a polymerizable liquid crystal compound and the like may be directly applied onto a surface of a cholesteric liquid crystal layer previously formed by a method described below and aligning and fixing steps may be repeatedly performed. The latter method is preferred.

By directly forming the next cholesteric liquid crystal layer on a surface of the previously formed cholesteric

liquid crystal layer, the alignment direction of liquid crystal molecules of the previously formed cholesteric liquid crystal layer on the air interface side matches the alignment direction of liquid crystal molecules on the lower side of a cholesteric liquid crystal layer formed on the previously formed cholesteric liquid crystal layer, which achieves good polarization characteristics of a laminated body of cholesteric liquid crystal layers. Furthermore, interference unevenness that may be derived from the unevenness of the thickness of the adhesive layer is not observed.

The thickness of the cholesteric liquid crystal layer is preferably 0.05 to 10 μm, more preferably 0.1 to 8.0 μm, and further preferably 0.2 to 6.0 μm. The total thickness of the cholesteric liquid crystal layers in the half-mirror film is preferably 2.0 to 30 μm, more preferably 2.5 to 25 μm, and further preferably 3.0 to 20 μm.

The half-mirror film used in the present invention has a high visible light transmittance maintained without decreasing the thickness of the cholesteric liquid crystal layer.

Method for producing cholesteric liquid crystal layer

Hereafter, a material for the cholesteric liquid crystal layer and a method for producing the cholesteric liquid crystal layer will be described.

The material used for forming the cholesteric liquid crystal layer is, for example, a liquid crystal composition including a polymerizable liquid crystal compound and a chiral agent (optically active compound). The liquid crystal composition may further optionally have, for example, a surfactant and a polymerization initiator.

The above-described liquid crystal composition that is obtained by mixing these components and dissolving the resulting mixture in a solvent or the like is applied onto, for example, a support, an alignment layer, and a cholesteric liquid crystal layer to serve as an underlayer. After cholesteric alignment is matured, the alignment can be fixed by curing the liquid crystal composition to form a cholesteric liquid crystal layer.

Polymerizable liquid crystal compound

The polymerizable liquid crystal compound may be a rod-like liquid crystal compound or a disc-like liquid crystal compound, but is preferably a rod-like liquid crystal compound.

The rod-like polymerizable liquid crystal compound for forming the cholesteric liquid crystal layer is, for example, a rod-like nematic liquid crystal compound. Preferred examples of the rod-like nematic liquid crystal compound include azomethines, azoxies, cyanobiphenyls, cyanophenyl esters, benzoic acid esters, cyclohexanecarboxylic acid phenyl esters, cyanophenyl cyclohexanes, cyano-substituted phenylpyrimidines, alkoxy-substituted phenylpyrimidines, phenyldioxanes, tolans, and alkenyl cyclohexylbenzonitriles. Not only low-molecular-weight liquid crystal compounds, but also high-molecular-weight liquid crystal compounds can be used.

The polymerizable liquid crystal compound is obtained by introducing a polymerizable group into a liquid crystal compound.

Examples of the polymerizable group include unsaturated polymerizable groups, an epoxy group, and an aziridinyl group. Unsaturated polymerizable groups are preferred and ethylenically unsaturated polymerizable groups are particularly preferred. The polymerizable group can be introduced into a molecule of a liquid crystal compound by various methods. The number of polymerizable groups in the polymerizable liquid crystal compound is preferably 1 to 6 and more preferably 1 to 3 in one molecule.

Examples of the polymerizable liquid crystal compound include compounds described in Makromol. Chem., vol. 190, p. 2255 (1989), Advanced Materials, vol. 5, p. 107 (1993), US4683327A, US5622648A, US5770107A, WO95/22586A, WO95/24455A, WO97/00600A, WO98/23580A, WO98/52905A, JP1989-272551A (JP-HO1-272551A), JP1994-16616A (JP-H06-16616A), JP1995-110469A (JP-H07-110469A), JP1999-080081A (JP-H11-080081A), and JP2001-328973A. Two or more polymerizable liquid crystal compounds may be used in combination. The combined use of two or more polymerizable liquid crystal compounds enables alignment at low temperature.

The amount of the polymerizable liquid crystal compound in the liquid crystal composition is preferably 80 to 99.9 mass%, more preferably 85 to 99.5 mass%, and particularly preferably 90 to 99 mass% relative to the mass of solids (the mass excluding the mass of solvent) in the liquid crystal composition.

Chiral agent: Optically active compound

The chiral agent has a function of inducing a helical structure of the cholesteric liquid crystal phase. The chiral compound may be selected in accordance with the purpose because the helical sense or helical pitch to be induced varies depending on the compound.

The chiral agent is not limited, and publicly known compounds can be used. Examples of the chiral agent include compounds described in Liquid Crystal Device Handbook (chapter 3, section 4-3, Chiral Agent for TN and STN, p. 199, edited by 142nd Committee of Japan Society for the Promotion of Science, 1989), JP2003-287623A,

JP2002-302487A, JP2002-080478A, JP2002-080851A, JP2010-181852A, and JP2014-034581A.

Although chiral agents generally include asymmetric carbon atoms, axial asymmetric compounds or planar asymmetric compounds, which include no asymmetric carbon atoms, can also be used as chiral agents.

Examples of axial asymmetric compounds or planar asymmetric compounds include binaphthyls, helicenes, paracyclophanes, and derivatives thereof.

The chiral agent may have a polymerizable group. When the chiral agent and the liquid crystal compound each have a polymerizable group, a polymer having a repeating unit derived from the polymerizable liquid crystal compound and a repeating unit derived from the chiral agent can be formed by the polymerization reaction between the polymerizable chiral agent and the polymerizable liquid crystal compound. In this case, the polymerizable group of the polymerizable chiral agent is preferably the same type of group as the polymerizable group of the polymerizable liquid crystal compound. Therefore, the polymerizable group of the chiral agent is also preferably an unsaturated polymerizable group, an epoxy group, or an aziridinyl group, more preferably an unsaturated polymerizable group, and further preferably an ethylenically unsaturated polymerizable group.

The chiral agent may be a liquid crystal compound.

Preferred examples of the chiral agent include isosorbide derivatives, isomannide derivatives, and binaphthyl derivatives. The isosorbide derivative may be a commercially available product such as LC-756 manufactured by BASF.

The content of the chiral agent in the liquid crystal composition is preferably 0.01 to 200 mol% and more preferably 1 to 30 mol% relative to the amount of the polymerizable liquid crystal compound.

Polymerization initiator

The liquid crystal composition preferably contains a polymerization initiator. In the case where polymerization reaction is caused to proceed through ultraviolet irradiation, the polymerization initiator used is preferably a photopolymerization initiator capable of initiating polymerization reaction through ultraviolet irradiation.

Examples of the photopolymerization initiator include $\alpha$-carbonyl compounds (described in US2367661A and US2367670A), acyloin ethers (described in US2448828A), $\alpha$-hydrocarbon-substituted aromatic acyloin compounds (described in US2722512A), polynuclear quinone compounds (described in US3046127A and US2951758A), combinations of triarylimidazole dimers and p-aminophenyl ketone (described in US3549367A), acridine and phenazine compounds (described in JP1985-105667A (JP-S60-105667A) and US4239850A), acylphosphine oxide compounds (JP1988-40799B (JP-S63-40799B), JP1993-29234B (JP-H05-29234B), JP1998-95788A (JP-H10-95788A), and JP1998-29997A (JP-H10-29997A), JP2001-233842A, JP2000-80068A, JP2006-342166A, JP2013-114249A, JP2014-137466A, JP4223071B, JP2010-262028A, and JP2014-500852A), oxime compounds (described in JP2000-66385A and JP4454067B), and oxadiazole compounds (described in US4212970A). For example, the description in paragraphs 0500 to 0547 of JP2012-208494A can also be taken into consideration.

The polymerization initiator is also preferably an acylphosphine oxide compound or an oxime compound.

The acylphosphine oxide compound is, for example, a commercially available IRGACURE 810 (compound name: bis(2,4,6-trimethylbenzoyl)-phenylphosphine oxide) manufactured by BASF Japan.

Examples of the oxime compound include commercially available products such as IRGACURE OXE01 (manufactured by BASF), IRGACURE OXE02 (manufactured by BASF), TR-PBG-304 (manufactured by Changzhou Tronly New Electronic Materials Co., Ltd.), ADEKA ARKLS NCI-930 (manufactured by ADEKA Corporation), and ADEKA ARKLS NCI-831 (manufactured by ADEKA Corporation).

The polymerization initiators may be used alone or in combination of two or more.

The content of the photopolymerization initiator in the liquid crystal composition is preferably 0.1 to 20 mass% and more preferably 0.5 to 5 mass% relative to the content of the polymerizable liquid crystal compound.

Crosslinking agent

The liquid crystal composition may optionally contain a crosslinking agent to improve the film hardness and durability after curing. Crosslinking agents that are curable by, for example, ultraviolet rays, heat, or moisture can be suitably used.

The crosslinking agent is not limited, and can be appropriately selected in accordance with the purpose. Examples of the crosslinking agent include polyfunctional acrylate compounds such as trimethylolpropane tri(meth)acrylate and pentaerythritol tri(meth)acrylate; epoxy compounds such as glycidyl (meth)acrylate and ethylene glycol diglycidyl ether; aziridine compounds such as 2,2-bishydroxymethylbutanol-tris[3-(1-aziridinyl)propionate] and 4,4-bis(ethyleneiminocarbonylamino)diphenylmethane; isocyanate compounds such as hexamethylene diisocyanate and biuret-type isocyanate; polyoxazoline compounds having oxazoline side groups; and alkoxysilane compounds such as vinyltrimethoxysilane and N-(2-aminoethyl)3-aminopropyltrimethoxysilane. Furthermore, a publicly known catalyst can be used in accordance with the reactivity of the crosslinking agent. This can improve the productivity in addition to the film hardness

and the durability. These crosslinking agents may be used alone or in combination of two or more.

The content of the crosslinking agent is preferably 3 to 20 mass% and more preferably 5 to 15 mass%. When the content of the crosslinking agent is 3 mass% or more, the crosslinking density can be improved. When the content of the crosslinking agent is 20 mass% or less, deterioration of the stability of the cholesteric liquid crystal layer can be prevented.

Alignment controlling agent

The liquid crystal composition may contain an alignment controlling agent that contributes to stably or rapidly providing a cholesteric liquid crystal layer having planar alignment.

Examples of the alignment controlling agent include fluorine (meth)acrylate polymers described in paragraphs [0018] to [0043] of JP2007-272185A, compounds represented by formulae (I) to (IV) described in paragraphs [0031] to [0034] of JP2012-203237A, and compounds described in JP2013-113913A.

The alignment controlling agents may be used alone or in combination of two or more.

The amount of the alignment controlling agent in the liquid crystal composition is preferably 0.01 to 10 mass%, more preferably 0.01 to 5 mass%, and particularly preferably 0.02 to 1 mass% relative to the total mass of the polymerizable liquid crystal compound. Copolymer

The liquid crystal composition may contain a copolymer. The copolymer is not limited, and can be appropriately selected in accordance with the purpose. An example of the copolymer is a copolymer described in WO2018/062068A.

Other additives

The liquid crystal composition may further contain at least one selected from the group consisting of various additives such as surfactants for adjusting the surface tension of a coating to make the thickness uniform and polymerizable monomers. The liquid crystal composition may further optionally contain, for example, a polymerization inhibitor, an antioxidant, an ultraviolet absorber, a light stabilizer, a coloring material, and fine metal oxide particles to the degree that the optical performance is not degraded.

The cholesteric liquid crystal layer can be formed by the following method. A liquid crystal composition prepared by dissolving a polymerizable liquid crystal compound, a chiral agent, an optionally added polymerization initiator, an optionally added surfactant, and the like in a solvent is applied onto a support, an alignment layer, a cholesteric liquid crystal layer produced in advance, or the like. The liquid crystal composition is dried to obtain a coating. The coating is irradiated with active rays to polymerize the cholesteric liquid crystal composition. Thus, a cholesteric liquid crystal layer whose cholesteric regularity is fixed is obtained.

A laminated film constituted by a plurality of cholesteric liquid crystal layers can be formed by repeatedly performing the above production process of the cholesteric liquid crystal layer.

Solvent

The solvent used for preparing the liquid crystal composition is not limited. The solvent can be appropriately selected in accordance with the purpose, and an organic solvent is preferably used.

The organic solvent is not limited, and can be appropriately selected in accordance with the purpose. Examples of the organic solvent include ketones, alkyl halides, amides, sulfoxides, heterocyclic compounds, hydrocarbons, esters, and ethers. These solvents may be used alone or in combination of two or more. In particular, ketones are preferred in consideration of environmental load.

Coating, Alignment, and Polymerization

The coating method of the liquid crystal composition onto a support, an alignment layer, a cholesteric liquid crystal layer serving as an underlayer, and the like is not limited, and can be appropriately selected in accordance with the purpose. Examples of the coating method include wire bar coating, curtain coating, extrusion coating, direct gravure coating, reverse gravure coating, die coating, spin coating, dip coating, spray coating, and slide coating.

Alternatively, a liquid crystal composition that has been applied onto another support may be transferred. By heating the applied liquid crystal composition, liquid crystal molecules are aligned. The heating temperature is preferably 200°C or lower and more preferably 130°C or lower. This alignment treatment provides an optical thin film in which the polymerizable liquid crystal compound is twistedly aligned so as to have a helical axis in a direction substantially perpendicular to the film surface.

The aligned liquid crystal compound can be further polymerized to cure the liquid crystal composition. The polymerization may be thermal polymerization or photopolymerization that uses irradiation with light, but is preferably

photopolymerization. The irradiation with light is preferably performed by using ultraviolet rays. The irradiation energy is preferably 20 $mJ/cm^2$ to 50 $J/cm^2$ and more preferably 100 $mJ/cm^2$ to 1,500 $mJ/cm^2$.

To facilitate the photopolymerization reaction, the irradiation with light may be performed under heating conditions or in a nitrogen atmosphere. The wavelength of ultraviolet rays applied is preferably 350 to 430 nm. The rate of polymerization reaction is preferably as high as possible from the viewpoint of stability. The rate of polymerization reaction is preferably 70% or more and more preferably 80% or more. The rate of polymerization reaction can be determined by measuring the consumption rate of polymerizable functional groups using an IR absorption spectrum.

Linearly polarized light reflection layer

The selectively reflecting layer may be a linearly polarized light reflection layer. The linearly polarized light reflection layer is, for example, a polarizer in which thin films having different refractive index anisotropies are laminated. Such a polarizer has a high visible light transmittance like the cholesteric liquid crystal layer and has a selective reflection center wavelength in a particular wavelength range of 650 to 780 nm. Such a polarizer can also reflect, at a wavelength with high luminosity, projection light that obliquely enters the polarizer during operation of a HUD system.

The polarizer in which thin films having different refractive index anisotropies are laminated is, for example, a polarizer described in JP1997-506837A (JP-H09-506837A). Specifically, when processing is performed under selected conditions so as to obtain the refractive-index relation, various materials may be employed to form the polarizer.

In general, one of first materials needs to have, in a selected direction, a refractive index different from that of a second material. This difference between the refractive indices can be provided by various methods such as stretching during formation of a film or after formation of a film, extrusion forming, or coating. In addition, the two materials preferably have similar rheological characteristics (for example, melt viscosity) so as to be extruded simultaneously.

A commercially available polarizer can be used as the polarizer in which thin films having different refractive index anisotropies are laminated. The commercially available polarizer may be a laminated body of a reflective polarizing plate and a temporary support.

Examples of the commercially available polarizer include commercially available optical films such as DBEF (registered trademark) (manufactured by 3M) and APF (Advanced Polarizing Film (manufactured by 3M)).

The thickness of the reflective polarizing plate is not limited, and is preferably 2.0 to 50 μm and more preferably 8.0 to 30 μm.

Retardation layer

The half-mirror film used in the present invention may include a retardation layer. In particular, the half-mirror film in which the selectively reflecting layer includes a cholesteric liquid crystal layer preferably includes a retardation layer.

By combining the retardation layer with the cholesteric liquid crystal layer, a clear projection image can be displayed. The adjustment of the front retardation and the direction of a slow axis can provide a half-mirror film capable of achieving high luminance in the HUD system and preventing formation of double images.

In the half-mirror film, the retardation layer is disposed on the visual side relative to all selectively reflecting layers (cholesteric liquid crystal layers) during operation. The retardation layer is preferably disposed between the transparent support and the selectively reflecting layer.

The retardation layer is not limited, and can be appropriately selected in accordance with the purpose. Examples of the retardation layer include stretched polycarbonate films, stretched norbornene polymer films, transparent films in which inorganic particles having birefringence, such as strontium carbonate, are aligned, thin films obtained by subjecting an inorganic dielectric to oblique deposition on the support, and films obtained by uniaxially aligning and fixing a liquid crystal compound.

The retardation layer is preferably a film obtained by uniaxially aligning and fixing a polymerizable liquid crystal compound. For example, the retardation layer can be formed by applying a liquid crystal composition including a polymerizable liquid crystal compound onto a temporary support or a surface of an alignment layer, subjecting a polymerizable liquid crystal compound in a liquid crystal state in the liquid crystal composition to nematic alignment, and then fixing the polymerizable liquid crystal compound by performing curing. The formation of the retardation layer in this case can be performed in the same manner as the formation of the cholesteric liquid crystal layer, except that a chiral agent is not added to the liquid crystal composition. When nematic alignment is formed after the application of the liquid crystal composition, the heating temperature is preferably 50 to 120°C and more preferably 60 to 100°C.

The retardation layer may be a layer obtained by applying a composition including a high-molecular-weight liquid crystal compound onto a temporary support or a surface of an alignment layer or the like, forming nematic alignment in a liquid crystal state, and then fixing the alignment by performing cooling.

The thickness of the retardation layer is not limited, and is preferably 0.2 to 300 μm, more preferably 0.4 to 150 μm, and further preferably 0.6 to 80 μm.

The thickness of the retardation layer formed of the liquid crystal composition is not limited, and is preferably 0.2 to 10 $\mu$m, more preferably 0.4 to 5.0 $\mu$m, and further preferably 0.6 to 2.0 $\mu$m.

The direction of the slow axis of the retardation layer is preferably determined in accordance with the incident direction of incident light for displaying projection images during operation of the HUD system and the helical sense of the cholesteric liquid crystal layer.

For example, in the case where the direction of the half mirror film during operation of the HUD system is determined and incident light enters the cholesteric liquid crystal layer from the lower side (vertically lower side) of the half-mirror film through the retardation layer, the direction of the slow axis can be determined in the following range in accordance with the front retardation.

When a retardation layer having a front retardation of 250 to 450 nm is used, the slow axis of the retardation layer is preferably in the range of +30° to +85° or -30° to -85° with respect to the vertically upward direction of the half-mirror film.

When a retardation layer having a front retardation of 50 to 180 nm is used, the slow axis of the retardation layer is preferably in the range of+120° to +175° or -120° to -175° with respect to the vertically upward direction of the half-mirror film.

When a retardation layer having a front retardation of 250 to 450 nm is used, the slow axis of the retardation layer is more preferably in the range of +35° to +70° or -35° to -70° with respect to the vertically upward direction of the half-mirror film.

When a retardation layer having a front retardation of 50 to 180 nm is used, the slow axis of the retardation layer is more preferably in the range of +125° to +160° or -125° to - 160° with respect to the vertically upward direction of the half mirror film.

For the slow axis, + and - are defined as above, and refer to a clockwise direction and a counterclockwise direction, respectively, when the visual position is fixed. The preferred direction is dependent on the helical sense of the cholesteric liquid crystal layer of the half-mirror film.

For example, when the helical sense of all cholesteric liquid crystal layers included in the half mirror film is right, it is sufficient that the direction of the slow axis is 30° to 85° or 120° to 175° in a clockwise direction with respect to the cholesteric liquid crystal layer when viewed from the retardation layer side. When the helical sense of all cholesteric liquid crystal layers included in the half-mirror film is left, it is sufficient that the direction of the slow axis is 30° to 85° or 120° to 175° in a counterclockwise direction with respect to the cholesteric liquid crystal layer when viewed from the retardation layer side.

Second retardation layer

The half-mirror film may include a second retardation layer in addition to the above-described retardation layer. In the description below, the above-described retardation layer is also referred to as a "first retardation layer".

It is sufficient that the second retardation layer is disposed so that the first retardation layer, all cholesteric liquid crystal layers, and the second retardation layer are provided in this order. In particular, it is sufficient that the first retardation layer, the selectively reflecting layer, and the second retardation layer are provided in this order from the viewer side.

When the second retardation layer is included at the above-described position in addition to the first retardation layer, formation of double images can be further prevented. In particular, formation of double images caused when a projection image is formed through incidence of p-polarized light can be further prevented. The reason why formation of double images can be further prevented by using the second retardation layer is assumed to be as follows. Formation of double images based on the fact that light having a wavelength outside the selective reflection range of the cholesteric liquid crystal layer is converted into polarized light at the cholesteric liquid crystal layer and reflected at the back surface of the screen image-displaying laminated glass can be prevented.

It is sufficient that the retardation of the second retardation layer at a wavelength of 550 nm is appropriately set within the range of preferably 160 to 460 nm and more preferably 240 to 420 nm.

The material, thickness, and the like of the second retardation layer can be selected in the same range as those of the first retardation layer.

The direction of the slow axis of the second retardation layer is preferably determined in accordance with the incident direction of incident light for displaying a projection image and the helical sense of the cholesteric liquid crystal layer.

For example, the second retardation layer having a front retardation of 160 to 400 nm is preferably provided so as to have a slow axis of +10° to +35° or -10° to -35° with respect to the vertically upward direction of the half-mirror film. The second retardation layer having a front retardation of 200 to 400 nm is preferably provided so as to have a slow axis of +100° to +140° or -100° to -140° with respect to the vertically upward direction of the half-mirror film.

Transparent support

In the screen image-displaying laminated glass according to an embodiment of the present invention, the half-mirror film has a transparent support.

For the transparent support preferably used in the present invention, the absolute value of an in-plane retardation Re is 10 nm or less and preferably 5 nm or less. The absolute value of the retardation Rth in the thickness direction is preferably 40 nm or less and more preferably 30 nm or less. The low retardation reduces the disturbance of polarized light due to the transparent support. Furthermore, the small in-plane physical properties improve the effects of the present invention.

The transparent support used in the present invention is preferably formed of a resin such as cellulose acylate resin or acrylic resin, more preferably formed of cellulose acylate resin, and particularly preferably formed of triacetyl cellulose resin or diacetyl cellulose resin.

In the present invention, two glass plates, a half-mirror film, and an intermediate film are brought into intimate contact with each other while the transparent support is heated so that the storage modulus of the transparent support is 2.0 GPa or less.

The thickness of the transparent support may be about 5.0 to 1000 μm, and is preferably 10 to 250 μm and more preferably 15 to 90 μm.

Other layers

The half-mirror film may include other layers other than the transparent support, the selectively reflecting layer, the first retardation layer, and the second retardation layer. The other layers are each preferably transparent in the visible light range.

The other layers each preferably have low birefringence. In this specification, the low birefringence means that the front retardation is 10 nm or less in a wavelength range in which the half-mirror film of the screen image-displaying laminated glass according to an embodiment of the present invention exhibits reflection. The front retardation is preferably 5 nm or less. Furthermore, the difference between the refractive indices of the other layers and the average refractive index (in-plane average refractive index) of the cholesteric liquid crystal layers is preferably small.

Examples of the other layers include a heat sealing layer, an alignment layer, and an adhesive layer.

Heat sealing layer

The half-mirror film preferably has a heat sealing layer on a surface of the transparent support opposite to the selectively reflecting layer.

Preferably, the half-mirror film and the intermediate film are sandwiched between the glass plate on the half-mirror film side and the glass plate on the intermediate film side, and a heat sealing layer including a thermoplastic resin and having a thickness of 0.1 to 50 μm is preferably disposed between the half-mirror film and the glass plate on the half-mirror film side. The intermediate film will be described in detail later.

The "heat sealing layer" in this specification refers to a layer that physically bonds the transparent support of the half-mirror film and the glass plate. The thermoplastic resin included in the heat sealing layer causes fusion as a result of heating during production of laminated glass.

The thickness of the heat sealing layer is 0.1 to 50 μm, preferably 0.1 to 25 μm, more preferably 0.1 to 10 μm, further preferably 0.1 to 5.0 μm, and particularly preferably 0.1 to 3.0 μm.

Thermoplastic resin included in heat sealing layer

The heat sealing layer includes a thermoplastic resin and is preferably formed of a transparent amorphous resin. The thermoplastic resin is preferably a resin having a high affinity for and good adhesiveness with the glass plate. The thermoplastic resin is a resin selected from the group consisting of polyvinyl acetal resins such as a polyvinyl butyral (PVB) resin, ethylene-vinyl acetate copolymers, and chlorine-containing resins. These resins are preferably a main component of the heat sealing layer. The main component refers to a component having a content of 50 mass% or more in the heat sealing layer.

Among the above resins, polyvinyl butyral or an ethylene-vinyl acetate copolymer is preferably used, and polyvinyl butyral is most preferably used. The resin is preferably a synthetic resin.

The polyvinyl butyral can be obtained by acetalizing polyvinyl alcohol with butyraldehyde. The lower limit of the degree of acetalization of polyvinyl butyral is preferably 40%. The upper limit of the degree of acetalization of polyvinyl butyral is preferably 85%. The lower limit of the degree of acetalization of polyvinyl butyral is more preferably 60% and further preferably 75%.

The polyvinyl alcohol is normally obtained by saponifying polyvinyl acetate, and a polyvinyl alcohol having a degree of saponification of 80 to 99.8 mol% is generally used.

The lower limit of the degree of polymerization of the polyvinyl alcohol is preferably 200 and the upper limit of the degree of polymerization is preferably 3000. When the degree of polymerization of the polyvinyl alcohol is 200 or more, the penetration resistance of a laminated glass to be obtained does not readily deteriorate. When the degree of polymerization is 3000 or less, good moldability of a resin film is achieved and the stiffness of the resin film does not excessively increase, which provides good workability. The lower limit of the degree of polymerization of the polyvinyl alcohol is more preferably 500 and the upper limit of the degree of polymerization is more preferably 2000.

The heat sealing layer may contain inorganic fine particles.

The inorganic fine particles added to the heat sealing layer are preferably fine particles of an inorganic oxide and more preferably, for example, fine particles of silica (silicon dioxide), aluminum oxide, titanium dioxide, or zirconium oxide. The inorganic fine particles added to the heat sealing layer are particularly preferably silica fine particles. For example, a commercially available silica fine particle-containing composition (commercially available colloidal silica dispersion liquid) can be directly used, or a commercially available silica fine particle-containing composition can be used by being optionally mixed with an organic solvent.

The inorganic fine particles added to the heat sealing layer are primary particles, and the primary particles preferably aggregate to form secondary particles.

The inorganic fine particles added to the heat sealing layer preferably have an average primary particle size of 5 to 50 nm, and the average secondary particle size of the inorganic fine particles is preferably 100 to 500 nm. In particular, the average secondary particle size is more preferably 150 to 400 nm.

The content (solid content) of the inorganic fine particles in the coating composition of the heat sealing layer is preferably 1 to 40 mass% and more preferably 3 to 30 mass% relative to the total solid content of the heat sealing layer.

The average primary particle size of the inorganic fine particles is a value measured for inorganic fine particles included in the dispersion liquid composition or inorganic fine particles included in the heat sealing layer.

This measurement is performed by observation with a transmission electron microscope. Specifically, the diameters of circles circumscribed about freely selected 50 primary particles are determined, and the arithmetic mean of the diameters is defined as an average primary particle size. The magnification of the observation with a transmission electron microscope may be any of 500,000 times to 5,000,000 times at which the primary particle size can be determined.

The average secondary particle size is a value measured by performing spherical fitting (refractive index 1.46) with a laser diffraction particle size analyzer. The measurement instrument is, for example, a MicroTrac MT3000 manufactured by MicrotracBEL Corp. Adhesion enhancer

The heat sealing layer may include an adhesion enhancer.

The adhesion enhancer is preferably a compound including a plurality of groups selected from the group consisting of polymerizable groups and groups that can form a bond with a resin included in the transparent support. Such an adhesion enhancer has a function of enhancing the adhesiveness between the heat sealing layer and the transparent support. At least one of the transparent support or the heat sealing layer preferably includes the above-described compound including a plurality of groups selected from the group consisting of polymerizable groups and groups that can form a bond with a resin included in the transparent support.

For the adhesion enhancer, the definition of the polymerizable group is the same as above. The number of polymerizable groups is not limited, and may be one or plural (two or more). However, if the adhesion enhancer does not include groups that can form a bond with a resin included in the transparent support, the number of polymerizable groups is plural.

When the adhesion enhancer has a polymerizable group, the above-described polymerization initiator is preferably appropriately selected and used.

The group in the adhesion enhancer that can form a bond with a resin included in the transparent support (hereafter also referred to as a reactive group) refers to a group capable of chemisorbing to a resin included in the transparent support through interaction with a group of a material for the resin included in the transparent support.

Examples of the reactive group include a boronic acid group, a boronic acid ester group, an oxiranyl group, an oxetanyl group, a hydroxyl group, a carboxyl group, an isocyanate group, and $-SiX_3$ (X represents a halogen, an alkoxy group, or an alkyl group, where at least one X represents a halogen or an alkoxy group). In particular, when the resin included in the transparent support is a cellulose ester resin subjected to partial saponification, the reactive group is preferably a group (e.g., a boronic acid group, a boronic acid ester group, an isocyanate group, and $-SiX_3$) capable of forming a bond with a hydroxyl group left in the cellulose ester resin among the exemplified resins and more preferably a boronic acid group, a boronic acid ester group, and an isocyanate group.

The number of reactive groups is not limited, and may be one or plural (two or more). Alignment layer

The half-mirror film may include an alignment layer as an underlayer to which the liquid crystal composition is applied when the cholesteric liquid crystal layer or the retardation layer is formed.

The alignment layer can be provided by means of rubbing treatment of an organic compound such as a polymer, oblique deposition of an inorganic compound, formation of a layer having microgrooves, or accumulation of an organic compound by the Langmuir-Blodgett method (LB film). Examples of the organic compound such as a polymer subjected

to rubbing treatment include resins such as polyimide, polyvinyl alcohol, polyester, polyarylate, polyamide-imide, polyetherimide, polyamide, and modified polyamide. Examples of the organic compound accumulated by the Langmuir-Blodgett method include ω-tricosanoic acid, dioctadecylmethylammonium chloride, and methyl stearate.

Furthermore, an alignment layer whose alignment function is activated by application of an electric field, application of a magnetic field, or irradiation with light may be used.

In particular, preferably, an alignment layer formed of a polymer is subjected to rubbing treatment and then the liquid crystal composition is applied onto the surface subjected to the rubbing treatment. The rubbing treatment can be performed by rubbing a surface of a polymer layer with paper or cloth in a certain direction.

The liquid crystal composition may be applied onto a surface of the support or a surface of the support subjected to the rubbing treatment without providing an alignment layer.

When the liquid crystal layer is formed using a temporary support, the alignment layer may be peeled off together with the temporary support and does not necessarily constitute the half-mirror film.

The thickness of the alignment layer is preferably 0.01 to 5.0 μm and more preferably 0.05 to 2.0 μm.

Adhesive layer

The adhesive layer is disposed to ensure the adhesiveness between layers in the half-mirror film.

The position of the adhesive layer is not limited, and the adhesive layer is disposed, for example, between the cholesteric liquid crystal layers, between the cholesteric liquid crystal layer and the retardation layer, between the cholesteric liquid crystal layer and the second retardation layer, and between the cholesteric liquid crystal layer and the support. The adhesive layer may also be disposed, for example, between the cholesteric liquid crystal layer and an intermediate film and between the retardation layer (first or second retardation layer) and the intermediate film.

The adhesive layer may be any layer formed of an adhesive agent.

From the viewpoint of the type of setting, adhesive agents are classified into hot-melt adhesive agents, thermosetting adhesive agents, photosetting adhesive agents, reaction-setting adhesive agents, and pressure-sensitive adhesive agents requiring no setting. Examples of usable materials for these adhesive agents include compounds such as acrylate compounds, urethane compounds, urethane acrylate compounds, epoxy compounds, epoxy acrylate compounds, polyolefin compounds, modified olefin compounds, polypropylene compounds, ethylene vinyl alcohol compounds, vinyl chloride compounds, chloroprene rubber compounds, cyanoacrylate compounds, polyamide compounds, polyimide compounds, polystyrene compounds, and polyvinyl butyral compounds.

From the viewpoint of workability and productivity, the type of setting is preferably photosetting. From the viewpoint of optical transparency and heat resistance, the material for use is preferably, for example, an acrylate compound, a urethane acrylate compound, or an epoxy acrylate compound.

The adhesive layer may be formed using a high-transparency adhesive transfer tape (OCA tape). The high-transparency adhesive transfer tape may be a commercially available tape for screen image display devices, in particular, a commercially available tape for a surface of a screen image display unit of a screen image display device. Examples of the commercially available tape include an adhesive sheet (e.g., PD-S1) manufactured by PANAC Co., Ltd. and an MHM adhesive sheet manufactured by Nichieikako Co., Ltd.

The thickness of the adhesive layer is preferably 0.5 to 10 μm and more preferably 1.0 to 5.0 μm. The thickness of the adhesive layer formed using the OCA tape is preferably 10 to 50 μm and more preferably 15 to 30 μm. The adhesive layer preferably has a uniform thickness to suppress the color unevenness or the like of the half-mirror film.

First glass plate and Second glass plate

In the screen image-displaying laminated glass and the production method according to embodiments of the present invention, the above-described half-mirror film having a transparent support and a selectively reflecting layer is disposed between a first glass and a second glass. In the present invention, the first glass plate, the second glass plate, and the transparent support are laminated so that the longitudinal directions of bright and dark lines observed by a magic mirror method match each other at the first glass plate, the second glass plate, and the transparent support.

In this specification, when a screen image is displayed on the screen image-displaying laminated glass, the glass plate positioned closer to the visual side is referred to as a first glass plate, and the glass plate positioned farther from the visual side is referred to as a second glass plate.

The glass plate may be a glass plate generally used for the screen image-displaying laminated glass such as a windshield glass constituting an HUD system. For example, a glass plate having a visible light transmittance of 80% or less, for example, 73% or 76%, such as a green glass having good heat-shielding properties may be used. Even when such a glass plate having a low visible light transmittance is used, a screen image-displaying laminated glass having a visible light transmittance of 70% or more even at the projection image-displaying section can be produced according to the present invention that uses the above-described half-mirror film.

For the screen image-displaying laminated glass according to an embodiment of the present invention, the two glass plates preferably have a gently curved surface. In particular, both the first glass plate and the second glass plate preferably have a gently curved concave surface on the viewer side.

Even in the glass plate having a gently curved surface, the longitudinal directions of bright and dark lines observed by a magic mirror method can be identified by limiting the observation section to a small section.

The screen image-displaying laminated glass according to an embodiment of the present invention preferably has a layer structure in which the first glass plate, the transparent support, the selectively reflecting layer, an intermediate film described later, and the second glass plate are provided in this order from the visual side of the projection image. In the screen image-displaying laminated glass according to an embodiment of the present invention, a layer other than the above-described layers may be interposed between the above-described layers.

The thickness of the glass plate is not limited, and may be about 0.5 mm to 5.0 mm and is preferably 1.0 mm to 3.0 mm and more preferably 2.0 to 2.3 mm.

The materials and thicknesses of the first glass plate and the second glass plate may be the same or different.

Intermediate film

The screen image-displaying laminated glass according to an embodiment of the present invention may have an intermediate film between the first glass and the half-mirror film and/or between the second glass and the half-mirror film. In the example illustrated in Fig. 1 and Fig. 2, the intermediate film is disposed between the second glass and the half-mirror film. For example, when the heat sealing layer is not disposed, the intermediate film may be disposed between the first glass and the half-mirror film and between the second glass and the half-mirror film.

The intermediate film may be any publicly known intermediate film used for, for example, the windshield glass of vehicles. The intermediate film may be, for example, a resin film including a resin selected from the group consisting of polyvinyl butyral (PVB), ethylene-vinyl acetate copolymers, and chlorine-containing resins. The above resin is preferably a main component of the intermediate film. The main component refers to a component having a content of 50 mass% or more in the intermediate film.

Among the above resins, polyvinyl butyral or an ethylene-vinyl acetate copolymer is preferably used, and polyvinyl butyral is more preferably used. The resin is preferably a synthetic resin.

The polyvinyl butyral can be obtained by acetalizing polyvinyl alcohol with butyraldehyde. The lower limit of the degree of acetalization of polyvinyl butyral is preferably 40% and more preferably 60%. The upper limit of the degree of acetalization of polyvinyl butyral is preferably 85% and more preferably 75%.

The polyvinyl alcohol is normally obtained by saponifying polyvinyl acetate, and a polyvinyl alcohol having a degree of saponification of 80 to 99.8 mol% is generally used.

The lower limit of the degree of polymerization of the polyvinyl alcohol is preferably 200 and the upper limit of the degree of polymerization is preferably 3000. When the degree of polymerization of the polyvinyl alcohol is 200 or more, the penetration resistance of a laminated glass to be obtained does not readily deteriorate. When the degree of polymerization is 3000 or less, good moldability of a resin film is achieved and the stiffness of the resin film does not excessively increase, which provides good workability. The lower limit of the degree of polymerization is more preferably 500, and the upper limit of the degree of polymerization is more preferably 2000.

The screen image-displaying laminated glass having an intermediate film according to an embodiment of the present invention can be formed by bonding a half-mirror film to a surface of the intermediate film. Alternatively, the screen image-displaying laminated glass can be formed by sandwiching a half-mirror film between two intermediate films. When two intermediate films are used, the two intermediate films may be the same or different, but are preferably the same.

The half-mirror film and the intermediate films can be bonded to each other by a publicly known bonding method, and laminate treatment is preferably employed. When the laminate treatment is performed, the laminate treatment is preferably performed under certain heating and pressure conditions to prevent the separation between the laminated body and the intermediate films after the treatment.

The temperature conditions of the laminate treatment are not limited. To stably perform the laminate treatment, the film surface temperature of the intermediate film on the side to which the half-mirror film is bonded is preferably 50 to 130°C and more preferably 70 to 100°C.

Pressure is preferably applied during the laminate treatment. The pressure conditions are not limited, and are preferably less than 2.0 kg/cm$^2$ (less than 196 kPa), more preferably 0.5 to 1.8 kg/cm$^2$ (49 to 176 kPa), and further preferably 0.5 to 1.5 kg/cm$^2$ (49 to 147 kPa). Layer on the visual side relative to selectively reflecting layer

In general, a projection image-displaying member has a problem in that an image based on reflected light from a layer at which projection light is reflected and an image based on reflected light from the front surface or back surface of the projection image-displaying member viewed from the light incidence side superimpose each other to form double images (or multiple images).

In the screen image-displaying laminated glass, such as a windshield glass having a selectively reflecting layer, used in the HUD system, the light that transmits through the selectively reflecting layer is circularly polarized light having a sense opposite to that of circularly polarized light that is reflected by the selectively reflecting layer or linearly polarized light in a direction orthogonal to the linearly polarized light that is reflected by the selectively reflecting layer. Therefore, when layers located on the back surface side with respect to the selectively reflecting layer have low birefringence, the reflected light from the back surface does not form noticeable double images because polarized light reflected by the selectively reflecting layer is normally the majority. In particular, when polarized light is used as projection light, the majority of the projection light can be reflected by the selectively reflecting layer.

In contrast, reflected light from the front surface may cause formation of noticeable double images. In particular, noticeable double images may be formed when the distance from the center of gravity of the selectively reflecting layer to the front surface of the windshield glass viewed from the light incidence side is a certain distance or longer. Specifically, in the structure of the screen image-displaying laminated glass according to an embodiment of the present invention, when the total thickness of layers present on the first retardation layer side with respect to the selectively reflecting layer (not including the thickness of the selectively reflecting layer), that is, the distance from the surface of the selectively reflecting layer on the visual side to the surface of the windshield glass on the visual side is 0.5 mm or more, noticeable double images are formed. When the distance is 1 mm or more, double images become more noticeable. When the distance is 1.5 mm or more, double images become further noticeable. When the distance is 2.0 mm or more, double images become particularly noticeable. Examples of the layers present on the visual side with respect to the selectively reflecting layer include the first retardation layer, the support, the intermediate film, and the second glass plate.

In the screen image display system that uses p-polarized light described later, however, even when the total thickness of the layers present on the visual side with respect to the selectively reflecting layer is the above thickness, the screen image-displaying laminated glass according to an embodiment of the present invention allows visual recognition of a projection image without forming noticeable double images.

Method for producing screen image-displaying laminated glass

The method for producing a screen image-displaying laminated glass according to an embodiment of the present invention includes, for example, providing a first glass, a second glass, and a transparent support of a half-mirror film and detecting the longitudinal directions of bright and dark lines of the first glass, the second glass, and the transparent support observed by a magic mirror method.

Then, an alignment layer and a retardation layer are preferably formed on one surface of the transparent support, and a selectively reflecting layer is formed on the retardation layer. More preferably, a heat sealing layer is formed on the other surface of the transparent support to produce a half-mirror film.

Subsequently, the half-mirror film is laminated on the first glass plate so that the heat sealing layer faces the first glass plate. This is performed so that the longitudinal directions of the bright and dark lines of the first glass plate and the transparent support of the half-mirror film observed by a magic mirror method match each other.

Subsequently, an intermediate film is laminated on a surface (selectively reflecting layer) of the half-mirror film, and a second glass plate is laminated on the intermediate film. This is performed so that the longitudinal directions of the bright and dark lines of the first glass plate, the transparent support of the half-mirror film, and the second glass plate observed by a magic mirror method match each other.

The thus-produced laminated body of the first glass plate, the half-mirror film, the intermediate film, and the second glass plate is subjected to, for example, thermocompression bonding under reduced pressure to produce a screen image-displaying laminated glass according to an embodiment of the present invention.

Windshield glass

The screen image-displaying laminated glass according to an embodiment of the present invention is suitably used as a windshield glass having a projected image-displaying function, such as a windshield glass constituting the HUD system.

In this specification, the windshield glass refers to a window pane of common vehicles such as cars, trains, airplanes, ships, and rides. The windshield glass is preferably a windshield present in a direction in which the vehicle travels. The windshield glass is preferably a windshield of vehicles.

The visible light transmittance of the windshield glass is preferably 70% or more, more preferably more than 70%, further preferably 75% or more, and particularly preferably 80% or more. The above visible light transmittance is preferably satisfied at any position of the windshield glass, and the projection image-displaying section particularly preferably satisfies the above visible light transmittance.

The half-mirror film used for the screen image-displaying laminated glass according to an embodiment of the present invention has high visible light transmittance in a wavelength range with high luminosity as described above. Therefore, when any glass typically used for windshield glasses is used, the above visible light transmittance can be satisfied.

It is sufficient that the windshield glass has a flat shape. The windshield glass may be molded for incorporation into vehicles for use and may have, for example, a curved surface. In a windshield glass molded for vehicles for use, the top (vertically upward) of the windshield glass during operation and the surface on the visual side (the observer side, the driver side, and the inside of a car) can be normally identified. In this specification, the term "vertically upward" for the windshield glass or the half-mirror film refers to a vertically upward direction that can be identified during operation as described above.

The windshield glass may have a uniform thickness or a nonuniform thickness in the projection image-displaying section. For example, as in a glass for vehicles described in JP2011-505330A, the windshield glass may have a wedge-shaped section and may include a projection image-displaying section having a nonuniform thickness, but preferably includes a projection image-displaying section having a uniform thickness.

Projection image-displaying section

In the screen image-displaying laminated glass according to an embodiment of the present invention, it is sufficient that the half-mirror film is disposed in the projection image-displaying section of the screen image-displaying laminated glass such as a windshield glass.

By disposing the half-mirror film on an outer surface of a glass plate of the screen image-displaying laminated glass or on an interlayer of the screen image-displaying laminated glass described later, the projection image-displaying section can be formed. When the half-mirror film is disposed on an outer surface of a glass plate of the screen image-displaying laminated glass, the half-mirror film may be disposed on the visual side or on the side opposite to the visual side when viewed from the glass plate, but is preferably disposed on the visual side. The half-mirror film is preferably disposed in the interlayer. This is because the half-mirror film having lower scratch resistance than the glass plate is protected.

In this specification, the projection image-displaying section is a section at which a projection image can be displayed using reflected light, and may be any section as long as a projection image projected from a projector or the like can be displayed in a visible manner.

The projection image-displaying section functions as, for example, a combiner of the HUD system. In the HUD system, the combiner refers to an optical member that can display, in a visible manner, a screen image projected from a projector while allows simultaneous observation of information or view on the opposite side of the combiner when the combiner is observed from the side on which the screen image is displayed. That is, the combiner has a function as an optical path combiner that performs display through superposition of external light and image light.

The projection image-displaying section may be disposed on the whole surface of the screen image-displaying laminated glass or on part of the whole area of the screen image-displaying laminated glass. When the projection image-displaying section is disposed on part of the screen image-displaying laminated glass, the projection image-displaying section may be disposed at any position of the screen image-displaying laminated glass, but is preferably disposed so that a virtual image is displayed at a position at which an observer (e.g., a driver) readily makes a visual identification during operation of the HUD system. For example, the position of the projection image-displaying section can be determined from the relationship between the position of a driver's seat of a vehicle for use and the position at which the projector is disposed.

The projection image-displaying section may have a flat shape without a curved surface, but may have a curved surface. Alternatively, the projection image-displaying section may have a concave shape or a convex shape on the whole and may display a projection image in an enlarged or reduced view.

Screen image display system

The screen image display system according to an embodiment of the present invention has the screen image-displaying laminated glass according to an embodiment of the present invention and a screen image display device.

In the screen image display system according to an embodiment of the present invention, the longitudinal directions of the bright and dark lines obtained by a magic mirror method match each other at the first glass plate, the second glass plate, and the transparent support in the screen image-displaying laminated glass. Furthermore, the matched longitudinal directions are allowed to be parallel with a plane formed by emitted light of a display image from the screen image display device and reflected light of a display image regularly reflected by the screen image-displaying laminated glass in the image display system. This can optimally reduce the distortion of a projected display image in the screen image display system according to an embodiment of the present invention.

The screen image display system according to an embodiment of the present invention can be used for various publicly known screen image display systems such as HUD systems and AR (augmented reality) glasses. In particular, the screen image display system according to an embodiment of the present invention is suitably used for HUD systems.

Screen image display device (imager)

The screen image display device can be selected in accordance with the light source used or the applications.

Examples of the screen image display device include a vacuum fluorescent display, a device using an LCD (liquid crystal display) method that uses liquid crystal, a device using an LCOS (liquid crystal on silicon) method, a device using a DLP (registered trademark) (digital light processing) method, and a device using a scanning method that uses laser. In particular, a device using an LCD method is preferred from the viewpoint of emitting linearly polarized light.

In the LCD method and the LCOS method, light beams of different colors are modulated and multiplexed in a light modulator, and light is emitted from a projection lens.

The DLP method is employed in a displaying system that uses a DMD (digital micromirror device). Drawing is performed while micromirrors corresponding to pixels are arranged, and light is emitted from a projection lens.

The scanning method is a method in which a screen is scanned with light beams and imaging is performed by using an afterimage effect of eyes (refer to, for example, the descriptions in JP1995-270711A (JP-H07-270711A) and JP2013-228674A). In the scanning method that uses laser, laser beams of different colors (e.g., red beam, green beam, and blue beam) subjected to intensity modulation are bundled into a single light beam with, for example, a multiplexing optical system or a condensing lens. Scanning with the light beam is performed by optical deflection means to perform drawing on an intermediate image screen described later.

In the scanning method, the intensity modulation of laser beams of different colors (e.g., red beam, green beam, and blue beam) may be directly performed by changing the intensity of a light source or may be performed using an external modulator.

The optical deflection means is, for example, a galvanometer mirror, a polygon mirror, a combination of a galvanometer mirror and a polygon mirror, or a MEMS (micro-electromechanical system) and is preferably a MEMS.

The scanning method is, for example, a random scanning method or a raster scanning method and is preferably a raster scanning method. In the raster scanning method, for example, the laser beam can be moved in a horizontal direction using a resonance frequency and in a vertical direction using a saw-tooth wave. Since the scanning method does not require a projection lens, the size of the device is easily reduced.

The light emitted from the screen image display device may be linearly polarized light or natural light (unpolarized light), and is preferably linearly polarized light. In the screen image display device using an LCD or LCOS method and the screen image display device using a laser light source, the emitted light is essentially linearly polarized light. In the case where the light emitted from the screen image display device is linearly polarized light and contains light beams having plural wavelengths (colors), the polarization directions (transmission axis directions) of the plural light beams are preferably the same or orthogonal to each other.

It has been known that some commercially available imagers have varying polarization directions in the wavelength ranges of emitted red, green, and blue light beams (refer to JP2000-221449A). Specifically, it has been known as an example that the polarization direction of green beams is orthogonal to the polarization direction of red beams and the polarization direction of blue beams.

Intermediate image screen

The screen image display device may be a device that uses an intermediate image screen. In this specification, the "intermediate image screen" is a screen on which a screen image is drawn. That is, for example, when light emitted from the screen image display device is not yet visible as a screen image, the screen image display device forms a visible screen image on the intermediate image screen using the light. The screen image drawn on the intermediate image screen may be projected on the screen image-displaying laminated glass according to an embodiment of the present invention through the intermediate image screen or may be projected on the screen image-displaying laminated glass according to an embodiment of the present invention by being reflected by the intermediate image screen.

Examples of the intermediate image screen include scattering films, microlens arrays, and rear-projection screens.

For example, in the case where the intermediate image screen is made of a plastic material, if the intermediate image screen exhibits birefringence, the polarization plane or light intensity of polarized light that enters the intermediate image screen is disturbed, which easily causes color unevenness or the like in the combiner. However, this color unevenness can be suppressed by using a retardation film having a particular phase difference.

The intermediate image screen preferably has a function of transmitting incident light beams while diverging the incident light beams. This is because the projection image can be displayed in an enlarged view. Such an intermediate image screen is, for example, a screen constituted by a microlens array. The microlens array used in an HUD system is described in, for example, JP2012-226303A, JP2010-145745A, and JP2007-523369A.

The projector may include, for example, a reflecting mirror that adjusts the optical path of projection light formed by the imager.

For the HUD system that uses the windshield glass as a projection image-displaying member, refer to JP1990-141720A (JP-H02-141720A), JP1998-96874A (JP-H10-96874A), JP2003-98470A, US5013134A, and JP2006-512622A.

The screen image-displaying laminated glass according to an embodiment of the present invention is particularly useful for HUD systems used in combination with a projector including, as a light source, a laser having a discrete emission wavelength in the visible light range, an LED, an OLED, or the like. This is because the selective reflection center wavelength of the cholesteric liquid crystal layer can be controlled in accordance with each emission wavelength. The screen image-displaying laminated glass can also be used for projection of a display such as an LCD (liquid crystal display) whose light for display is polarized.

Projection light (incident light)

In the screen image display system according to an embodiment of the present invention, a viewer can visually recognize a reflected image by projecting a screen image from a linearly p-polarized light source onto the screen image-displaying laminated glass according to an embodiment of the present invention.

The direction in which the linearly p-polarized light is incident is a direction in which the half-mirror film incorporated in the laminated glass functions as a reflection polarizer of linearly polarized light. When the half-mirror film has a selectively reflecting layer and a retardation layer, the light source is disposed so that linearly p-polarized light is incident from the retardation layer side.

The incident light is preferably caused to enter the half-mirror film at an oblique incidence angle of 45° to 70° with respect to the normal of the half-mirror film. The Brewster's angle at an interface between a glass having a refractive index of about 1.51 and air having a refractive index of 1 is about 56°. When p-polarized light is caused to enter the half-mirror film in the above-described angle range, only a small amount of incident light for displaying a projection image is reflected by the surface of the windshield glass on the visual side relative to the selectively reflecting layer, which allows display of a screen image that is less susceptible to double images. The above angle is also preferably 50° to 68°. Herein, it is sufficient that the projection image can be observed on the incidence side of projection light at an angle of 45° to 70°, preferably 50° to 68°, symmetrically with respect to the normal of the selectively reflecting layer.

The incident light may enter the screen image-displaying laminated glass in any direction, that is, from the top, bottom, left, and right of the screen image-displaying laminated glass, and the direction may be determined in accordance with the visual direction. For example, the incident light preferably enters the screen image-displaying laminated glass at the above-described oblique incidence angle from the bottom during operation.

The slow axis of the retardation layer in the screen image-displaying laminated glass is preferably 30° to 85° or 120° to 175° with respect to the oscillation direction of incident p-polarized light (incidence plane of incident light) in accordance with the front retardation of the retardation layer.

As described above, projection light used when a projection image is displayed on a screen image display system is preferably p-polarized light that oscillates in a direction parallel to the incidence plane.

When light emitted from the screen image display device is not linearly polarized light, the light may be converted into p-polarized light by disposing a linearly polarizing film on the side through which light is emitted from the screen image display device, or the light may be converted into p-polarized light through an optical path between the screen image display device and the screen image-displaying laminated glass. As described above, in the screen image display device in which the polarization direction varies in the wavelength ranges of red, green, and blue light beams emitted, the incident light is preferably p-polarized light in the wavelength ranges of all colors by wavelength-selectively controlling the polarization direction.

The screen image display system may be a projection system having a changeable imaging position of a virtual image. Such a projection system having a changeable imaging position of a virtual image is described in, for example, JP2009-150947A.

If the imaging position of a virtual image is changeable, a driver can visually recognize the virtual image with more comfort and convenience, for example, when the screen image display system is used for the HUD system of vehicles. The imaging position of a virtual image is a position at which a driver of a vehicle can visually recognize the virtual image, such as a position 1000 mm or more ahead of the windshield glass from the driver.

Herein, if the glass is nonuniform (wedge shape) in the projection image-displaying section as described in JP2011-505330A, the angle of the wedge shape needs to be changed when the imaging position of a virtual image is changed. Therefore, as described in, for example, JP2017-15902A, the angle of the wedge shape needs to be partly changed to change the projection position, thereby pretendedly addressing the change in the imaging position of a virtual image.

In the HUD system built by using the screen image display system according an embodiment of the present invention and by using p-polarized light as described above, the wedge-shaped glass is not required, which allows the glass to have a uniform thickness in the projection image-displaying section. Therefore, a projection system in which

the imaging position of a virtual image is changeable can be suitably employed.

Examples

Hereafter, the present invention will be further specifically described based on Examples, Comparative Examples, and Production Examples.

Materials, reagents, amounts and percentages of substances, operations, and the like used in Examples, Comparative Examples, and Production Examples below can be appropriately changed. Therefore, the scope of the present invention is not limited to Examples and Production Examples below. Production of cellulose acylate film

A cellulose acylate film having a thickness of 40 μm was produced by the same method as in Example 20 of WO2014/112575A.

Identification of longitudinal direction of bright and dark lines by magic mirror method

Subsequently, the cellulose acylate film was partly cut out and observed with a magic mirror device (manufactured by KOBELCO RESEARCH INSTITUTE, INC., MIS-3000) to identify the longitudinal direction of bright and dark lines. The cellulose acylate film had good smoothness in this longitudinal direction of bright and dark lines.

Furthermore, a plurality of flat glass plates having a size of length 260 mm × width 300 mm with a thickness of 2 mm were provided and observed with a magic mirror device in the same manner. Consequently, the longitudinal direction of the bright and dark lines of all the flat glass plates was found to be parallel with the direction of the length 260 mm. The flat glass plates had good smoothness in this longitudinal direction of bright and dark lines.

Saponification of cellulose acylate film

The cellulose acylate film was caused to pass through dielectric heating rolls at 60°C to increase the film surface temperature to 40°C. Then, an alkali solution having the following composition was applied onto one surface of the film in an amount of 14 mL/$m^2$ using a bar coater and retained for 10 seconds under a steam-type far infrared heater (manufactured by Noritake Co., Ltd.) heated to 110°C.

Then, pure water was applied in the same manner in an amount of 3 mL/$m^2$ using a bar coater.

Subsequently, washing with water using a fountain coater and draining using an air knife were repeatedly performed three times, and then the film was dried by being retained in a drying zone at 70°C for 5 seconds to produce a saponified cellulose acylate film 1.

Composition of alkali solution

· Potassium hydroxide: 4.7 parts by mass
· Water: 15.7 parts by mass
· Isopropanol: 64.8 parts by mass
· Surfactant ($C_{16}H_{33}O(CH_2CH_2O)_{10}H$): 1.0 part by mass
· Propylene glycol: 14.9 parts by mass

Formation of alignment layer

An alignment layer-forming coating liquid having the following composition was applied onto the saponified surface of the cellulose acylate film 1 in an amount of 24 mL/$m^2$ using a wire bar coater and dried with hot air at 100°C for 120 seconds.

Composition of alignment layer-forming coating liquid

· Modified polyvinyl alcohol below: 28 parts by mass
· Citric acid ester (AS3, manufactured by Sankyo Kagaku Yakuhin Co., Ltd.): 1.2 parts by mass
· Photoinitiator (IRGACURE 2959, manufactured by BASF): 0.84 parts by mass
· Glutaraldehyde: 2.8 parts by mass
· Solvent (water): 699 parts by mass

· Solvent (methanol): 226 parts by mass

· Modified polyvinyl alcohol

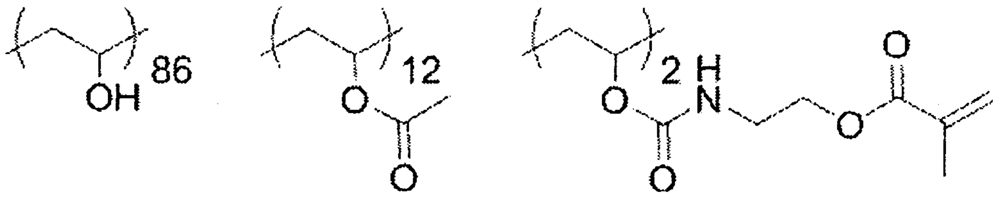

Preparation of coating liquid

Cholesteric liquid crystal layer-forming coating liquid

The following components were mixed to prepare cholesteric liquid crystal layer-forming coating liquids B, G, and R having the following composition.

Composition of cholesteric liquid crystal layer-forming coating liquids B, G, and R

· Mixture 1: 100 parts by mass
· Fluorine-based compound 1: 0.05 parts by mass
· Fluorine-based compound 2: 0.04 parts by mass
· Dextrorotatory chiral agent LC-756 (manufactured by BASF): adjusted in accordance with the target reflection wavelength
· Polymerization initiator IRGACURE OXE01 (manufactured by BASF): 1.0 part by mass
· Solvent (methyl ethyl ketone): such an amount that the solute concentration was 25 mass%

· Mixture 1

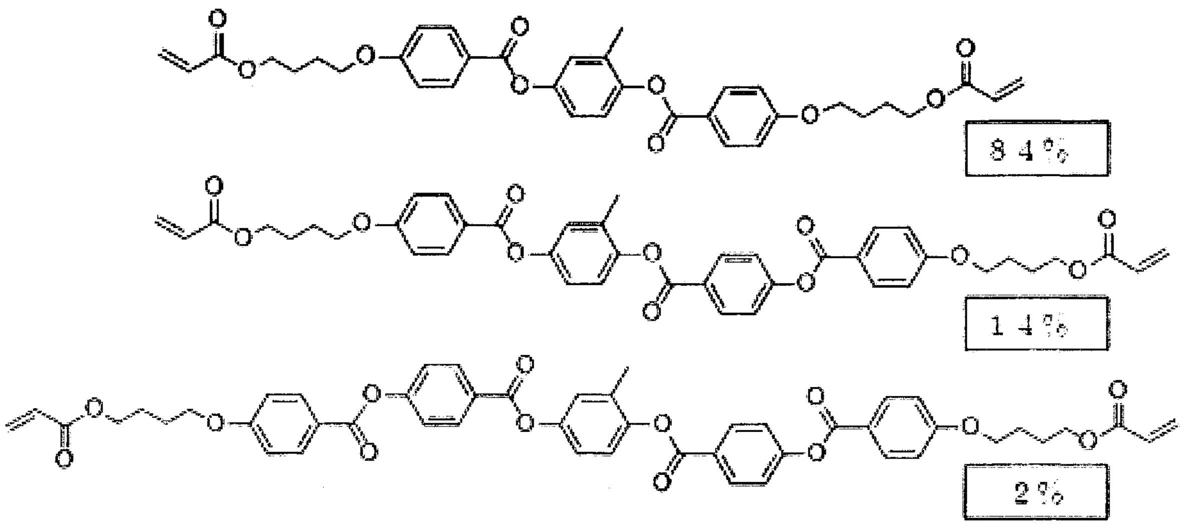

84%

14%

2%

The value is expressed in units of mass%.

· Fluorine-based compound 1

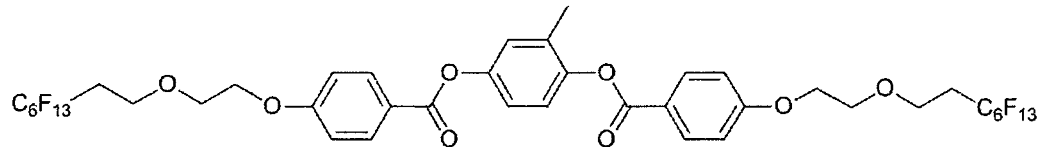

· Fluorine-based compound 2

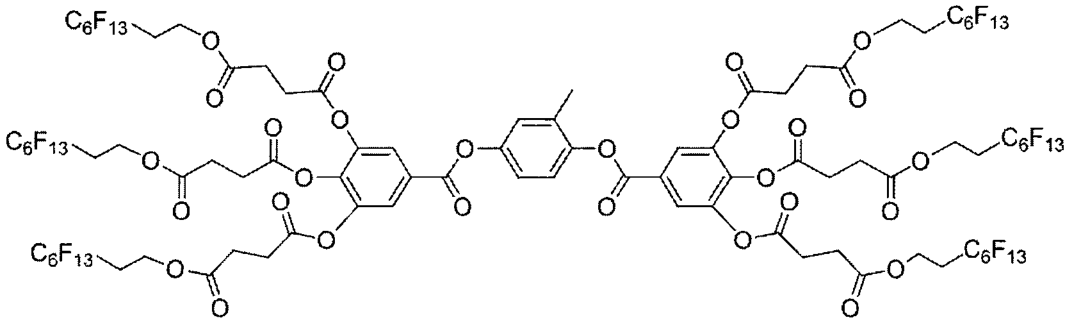

The amount of the chiral agent LC-756 in the coating liquid was adjusted to prepare cholesteric liquid crystal layer-forming coating liquids B, G, and R. In the following description, the cholesteric liquid crystal layer-forming coating liquids B, G, and R are also simply referred to as coating liquids B, G, and R.

A single cholesteric liquid crystal layer was formed on a peelable support using each coating liquid in the same manner as the production of a selectively reflecting layer below, and the reflection characteristics were checked. Consequently, all the formed cholesteric liquid crystal layers were right circularly polarized light reflection layers. The single liquid crystal layer of the coating liquid B had a selective reflection center wavelength of 465 nm. The single liquid crystal layer of the coating liquid G had a selective reflection center wavelength of 710 nm. The single liquid crystal layer of the coating liquid R had a selective reflection center wavelength of 750 nm.

Retardation layer-forming coating liquid

The following components were mixed to prepare a retardation layer-forming coating liquid having the following composition.

Composition of retardation layer-forming coating liquid

· Mixture 1: 100 parts by mass
· Fluorine-based compound 1: 0.05 parts by mass
· Fluorine-based compound 2: 0.01 parts by mass
· Polymerization initiator IRGACURE OXE01 (manufactured by BASF): 0.75 part by mass
· Solvent (methyl ethyl ketone): such an amount that the solute concentration was 25 mass%

Production of cholesteric liquid crystal layer laminated body A

The thus-produced alignment layer was subjected to rubbing treatment (rayon cloth, pressure: 0.1 kgf (0.98 N), rotation speed: 1000 rpm, transport speed: 10 m/min, moved back and force once) in a direction 45° rotated counterclockwise with respect to the short-side direction.

This alignment layer is referred to as an alignment layer 1. Furthermore, rubbing treatment was performed under the same conditions, except that the direction of the rubbing treatment was changed to a direction 45° rotated clockwise with respect to the short-side direction. This alignment layer is referred to as an alignment layer 2.

The retardation layer-forming coating liquid was applied onto the rubbed surface of the alignment layer 1 or the alignment layer 2 of the cellulose acylate film 1 using a wire bar, then dried, and heat-treated at 55°C for 1 minute. Subsequently, the cellulose acylate film 1 was placed on a hot plate at 50°C and irradiated with ultraviolet light for 6 seconds using an electrodeless lamp (manufactured by Fusion UV Systems, D bulb (60 mW/cm)) to fix the liquid crystal

phase. Thus, a retardation layer having a thickness of 0.8 μm was obtained.

The retardation and the angle of slow axis of the retardation layer were measured with an AxoScan (manufactured by Axometrics). As a result, the retardation was 130 nm. For the alignment layer 1, the angle of slow axis was +45° with respect to the longitudinal direction of the bright and dark lines of the cellulose acylate film. For the alignment layer 2, the angle of slow axis was +135° with respect to the longitudinal direction of the bright and dark lines of the cellulose acylate film.

The coating liquid B was applied onto a surface of the obtained retardation layer using a wire bar, then dried, and heat-treated at 85°C for 1 minute. Subsequently, the cellulose acylate film 1 was placed on a hot plate at 80°C and irradiated with ultraviolet light for 6 seconds using an electrodeless lamp (manufactured by Heraeus, D bulb (60 mW/cm)) to fix the cholesteric liquid crystalline phase. Thus, a cholesteric liquid crystal layer having a thickness of 2.3 μm was obtained.

The coating liquid G was applied onto a surface of the obtained cholesteric liquid crystal layer using a wire bar, then dried, and heat-treated at 70°C for 1 minute. Subsequently, the cellulose acylate film 1 was placed on a hot plate at 75°C and irradiated with ultraviolet light for 6 seconds using an electrodeless lamp (manufactured by Heraeus, D bulb (60 mW/cm)) to fix the cholesteric liquid crystalline phase. Thus, a cholesteric liquid crystal layer having a thickness of 0.7 μm was obtained.

The coating liquid R was applied onto a surface of the obtained cholesteric liquid crystal layer using a wire bar, then dried, and heat-treated at 70°C for 1 minute. Subsequently, the cellulose acylate film 1 was placed on a hot plate at 75°C and irradiated with ultraviolet light for 6 seconds using an electrodeless lamp (manufactured by Heraeus, D bulb (60 mW/cm)) to fix the cholesteric liquid crystalline phase. Thus, a cholesteric liquid crystal layer having a thickness of 2.8 μm was obtained.

Thus, a cholesteric liquid crystal layer laminated body A (half-mirror film) including a retardation layer and a selectively reflecting layer consisting of three cholesteric liquid crystal layers was obtained.

The transmission spectrum of the cholesteric liquid crystal layer laminated body A was measured with a spectrophotometer (manufactured by JASCO Corporation, V-670). Consequently, a transmission spectrum having selective reflection center wavelengths of 465 nm, 710 nm, and 750 nm was obtained.

Production of heat sealing layer

Heat sealing layer-forming coating liquid 1

The following components were mixed to prepare a heat sealing layer-forming coating liquid 1 having the following composition.

Heat sealing layer-forming coating liquid 1

- · PVB sheet piece (manufactured by SEKISUI CHEMICAL Co., Ltd.): 4.75 parts by mass
- · Silica particle dispersion liquid: 5.00 parts by mass
- · Solvent (methanol): 40.38 parts by mass
- · Solvent (1-butanol): 2.38 parts by mass
- · Solvent (methyl acetate): 47.50 parts by mass

Preparation of silica particle dispersion liquid

For the silica particle dispersion liquid, AEROSIL RX300 (manufactured by NIPPON AEROSIL Co., Ltd.) serving as inorganic fine particles was added to MiBK (methyl isobutyl ketone) so as to have a concentration of solid contents of 5 mass%, and stirring was performed using a magnetic stirrer for 30 minutes. Then, ultrasonic dispersion was performed using an ultrasonic dispersing machine (manufactured by SMT Co., Ltd., Ultrasonic Homogenizer UH-600S) for 10 minutes to prepare a silica particle dispersion liquid.

A sample for measuring the average secondary particle size was partly collected from the prepared dispersion liquid, and the average secondary particle size of the silica particles in the dispersion liquid was measured using a Microtrac MT3000 (manufactured by MicrotracBEL Corp.). As a result, the average secondary particle size of the silica particles was 190 nm.

Production of heat sealing laminated body

The heat sealing layer-forming coating liquid 1 was applied onto a back surface (the surface onto which the cholesteric liquid crystal was not applied) of the cholesteric liquid crystal layer laminated body A using a wire bar and then dried. Then, heat treatment was performed at 50°C for 1 minute to form a heat sealing layer having a thickness of 0.5 μm.

Thus, a heat sealing laminated body Ah that had a front surface on which the retardation layer and the selectively reflecting layer consisting of three cholesteric liquid crystal layers were formed and that had a back surface on which the heat sealing layer was formed was obtained.

Production of laminated glass

The heat sealing laminated body Ah produced using the alignment layer 1 or the alignment layer 2 was cut to a size of length 220 mm × width 290 mm. Herein, a heat sealing laminated body in which the longitudinal direction of the bright and dark lines of the cellulose acylate film is parallel with the direction of the length 220 mm and a heat sealing laminated body in which the longitudinal direction of the bright and dark lines of the cellulose acylate film is parallel with the direction of the width 290 mm were produced.

The heat sealing laminated body Ah having a size of length 220 mm × width 290 mm and including a cellulose acylate film whose bright and dark lines were identified was disposed at the center of the above-described glass plate having a size of length 260 mm × width 300 mm with a thickness of 2 mm and having bright and dark lines identified by a magic mirror method so that the heat sealing layer faced downward. That is, this laminated body included the glass plate (first glass plate), the transparent support, the retardation layer, and the cholesteric liquid crystal layers disposed in this order.

A PVB film (manufactured by SEKISUI CHEMICAL Co., Ltd.) having a size of length 260 mm × width 300 mm with a thickness of 0.38 mm and serving as an intermediate film was disposed on the cholesteric liquid crystal layers of the laminated body. The above-described glass plate (second glass plate) having a size of length 260 mm × width 300 mm with a thickness of 2 mm and having identified bright and dark lines was disposed thereon.

This laminated body was held at 90°C and 10 kPa (0.1 atmospheres) for one hour and then heated in an autoclave (manufactured by KURIHARA SEISAKUSHO Co., Ltd.) at 140°C and 1.3 MPa (13 atmospheres) for 20 minutes to remove air bubbles. Thus, laminated glasses W1 to W7 were obtained.

The laminated glasses W1 to W7 were obtained so as to have two different longitudinal directions of the bright and dark lines of the first glass plate, the transparent support, and the second glass plate observed by a magic mirror method. Specifically, when the longitudinal direction of bright and dark lines was arranged in parallel with a plane (incidence plane) formed by light emitted from the screen image display device in the screen image display system (refer to Fig. 5) and light regularly reflected by the laminated glass, the arrangement "parallel" was presented. On the other hand, when the longitudinal direction of bright and dark lines was arranged perpendicularly to the plane, the arrangement "perpendicular" was presented. Table 1 shows the arrangement. Each of the laminated glasses includes a heat sealing laminated body Ah produced by appropriately using the alignment layer 1 and the alignment layer 2 so that the angle of slow axis of the retardation layer is +135° with respect to the vertically upward direction of the glass.

Evaluation of distortion of display image

Fig. 5 is a schematic side view illustrating the situation in which the distortion of a display image is evaluated.

A screen image display device (manufactured by APPLE, iPad) serving as a light source was fixed to a horizontal floor surface with adjustment of an image projection angle. The laminated glass was disposed using a base so that the distance between the center of the laminated glass (screen image display portion) and the center of the imager was 1.5 m. At this time, the laminated glass was inclined so that the angle formed between the floor surface and the surface of the laminated glass was 30°.

The optical path of emitted light from the imager and the optical path of the regularly reflected light were present in a plane (in a drawing plane in Fig. 3) vertical to the floor surface, and the emitted light was incident on the laminated glass as p-polarized light.

The visibility of the distortion of a display image was visually evaluated from a position at which the display image could be checked when a screen image was projected on an imager. Table 1 shows the results.

In Table 1, "A" was given when distortion was not visually recognized, and "B" was given when distortion was visually recognized.

Table 1

| Table 1 | Production Example 1 | Production Example 2 | Production Example 3 | Production Example 4 | Production Example 5 | Production Example 6 | Production Example 7 |
|---|---|---|---|---|---|---|---|
| Laminated glass | W1 | W2 | W3 | W4 | W5 | W6 | W7 |
| Second glass | parallel | perpendicular | parallel | parallel | parallel | perpendicular | perpendicular |
| Transparent support | parallel | parallel | perpendicular | parallel | perpendicular | parallel | perpendicular |
| First glass | parallel | parallel | parallel | perpendicular | perpendicular | perpendicular | parallel |
| Distortion of display image | A | B | B | B | B | B | B |

As shown in Table 1, Production Example 1 corresponding to the screen image display system according to an embodiment of the present invention in which the longitudinal directions of the bright and dark lines obtained by a magic mirror method match each other at the first glass plate, the second glass plate, and the transparent support of the half-mirror film and furthermore the matched longitudinal directions are allowed to be parallel with a plane formed by emitted light of a display image from the screen image display device and reflected light of a display image regularly reflected by the screen image-displaying laminated glass in the screen image display system can display a high-quality screen image without distorting the display image.

Production of cholesteric liquid crystal layer laminated body B (B 1, B2, and B3)

Preparation of coating liquid 2

Cholesteric liquid crystal layer-forming coating liquid

The following components were mixed to prepare cholesteric liquid crystal layer-forming coating liquids R2 and R3 having the following composition.

Composition of cholesteric liquid crystal layer-forming coating liquid R2

- · Mixture 1: 100 parts by mass
- · Fluorine-based compound 1: 0.05 parts by mass
- · Fluorine-based compound 2: 0.04 parts by mass
- · Copolymer 1: 0.025 parts by mass
- · Dextrorotatory chiral agent LC-756 (manufactured by BASF): adjusted in accordance with the target reflection wavelength
- · Polymerization initiator IRGACURE OXE01 (manufactured by BASF): 1.0 part by mass
- · Solvent (methyl ethyl ketone): such an amount that the solute concentration was 30 mass%

Composition of cholesteric liquid crystal layer-forming coating liquid R3

- · Mixture 1: 100 parts by mass
- · Fluorine-based compound 1: 0.05 parts by mass
- · Fluorine-based compound 2: 0.04 parts by mass
- · Copolymer 2: 0.025 parts by mass
- · Dextrorotatory chiral agent LC-756 (manufactured by BASF): adjusted in accordance with the target reflection wavelength
- · Polymerization initiator IRGACURE OXE01 (manufactured by BASF): 1.0 part by mass
- · Methyl ethyl ketone (solvent): such an amount that the solute concentration was 30 mass%

- · Copolymer 1

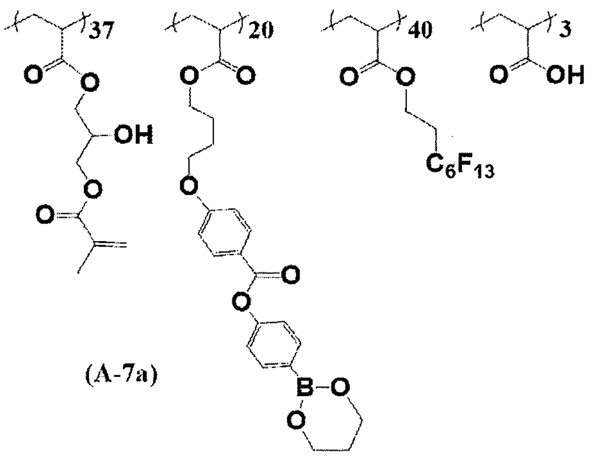

(A-7a)

· Copolymer 2

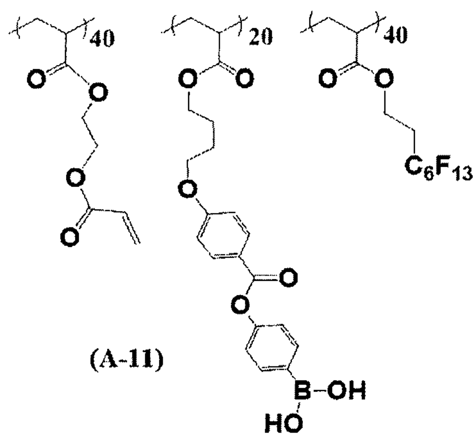

(A-11)

Synthesis of copolymer 1

The copolymer 1 was synthesized as follows.

Into a 300 ml three-necked flask equipped with a stirrer, a thermometer, a reflux condenser, and a nitrogen gas tube, 6.7 g of cyclohexanone and 1.7 g of isopropanol were charged, and the temperature was increased to 73°C.

Subsequently, a mixed solution containing 12.3 g (29.3 mmol) of 2-(perfluorohexyl)ethyl acrylate, 5.6 g (14.7 mmol) of 4-(4-acryloyloxybutoxy)benzoyloxyphenylboronic acid, 2.1 g (29.3 mmol) of acrylic acid, 26.4 g of cyclohexanone, 6.6 g of isopropanol, and 0.51 g of an azo polymerization initiator (manufactured by Wako Pure Chemical Industries, Ltd., V-601) was added dropwise at a constant rate so that the dropwise addition was completed after 150 minutes. After 1.3 g of 1,3-propanediol was added thereto, the temperature was increased to 90°C and stirring was further continued for 4 hours.

Subsequently, 4.2 g (29.3 mmol) of glycidyl methacrylate, 1.5 g (4.7 mmol) of tetrabutylammonium bromide, 0.4 g of p-methoxyphenol, 18.0 g of cyclohexanone, and 4.5 g of isopropanol were charged, and the temperature was increased to 80°C and stirring was continued for 8 hours. Thus, 91.9 g of a cyclohexanone/isopropanol solution of copolymer 1 was obtained.

The weight-average molecular weight (Mw) of the copolymer 1 was 11,200. The weight-average molecular weight (Mw) of the copolymer 1 was determined in terms of polystyrene using gel permeation chromatography (EcoSEC HLC-8320GPC manufactured by Tosoh Corporation) under the measurement conditions of eluant NMP, flow rate 0.50 ml/min, and temperature 40°C. Three columns of TSKgel SuperAWM-H (manufactured by Tosoh Corporation) were used.

The acid value of the obtained copolymer 1 was 5.2, and the residual percentage of carboxylic acid was 3 mol%.

Synthesis of copolymer 2

A copolymer 2 was synthesized by the same method as that in the synthesis example of the copolymer 1, except that the monomer component was changed.

The cholesteric liquid crystal layer-forming coating liquids R2 and R3 were prepared by adjusting the content of the chiral agent LC-756 in the composition of the cholesteric liquid crystal layer-forming coating liquid. In the following description, the cholesteric liquid crystal layer-forming coating liquids R2 and R3 are also simply referred to as coating liquids R2 and R3.

A single cholesteric liquid crystal layer was formed on a peelable support in the same manner as the production of a selectively reflecting layer described below using each of the coating liquids, and the reflection characteristics were checked. All the formed cholesteric liquid crystal layers were right circularly polarized light reflection layers. The single liquid crystal layer of each of the coating liquids R2 and R3 had a selective reflection center wavelength of 750 nm.

An alignment layer was formed, in the same manner as in the cholesteric liquid crystal layer laminated body A, on a surface of the cellulose acylate film 1 subjected to the same saponification treatment as the cholesteric liquid crystal layer laminated body A.

The formed alignment layer was subjected to rubbing treatment (rayon cloth, pressure: 0.1 kgf (0.98 N), rotation speed: 1000 rpm, transport speed: 10 m/min, moved back and force once) in a direction 45° rotated clockwise with respect to the short-side direction.

The same retardation layer-forming coating liquid as that of the cholesteric liquid crystal layer laminated body A was applied onto the rubbed surface of the cellulose acylate film 1 using a wire bar, then dried, and heat-treated at 55°C for 1 minute.

Subsequently, the cellulose acylate film 1 was placed on a hot plate at 50°C and irradiated with ultraviolet light for 6 seconds using an electrodeless lamp (manufactured by Fusion UV Systems, D bulb (60 mW/cm)) to fix the liquid crystal phase. Thus, a retardation layer having a thickness of 0.8 μm was obtained.

The retardation and the angle of slow axis of the retardation layer were measured with an AxoScan (manufactured by Axometrics). The retardation was 130 nm. The angle of slow axis was +135° with respect to the longitudinal direction of the bright and dark lines of the cellulose acylate film.

The same coating liquid B as that of the cholesteric liquid crystal layer laminated body A was applied onto a surface of the obtained retardation layer using a wire bar, then dried, and heat-treated at 85°C for 1 minute. The resulting product was placed on a hot plate at 75°C and irradiated with ultraviolet light for 6 seconds using an electrodeless lamp (manufactured by Heraeus, D bulb (60 mW/cm)) to fix the cholesteric liquid crystalline phase. Thus, a cholesteric liquid crystal layer having a thickness of 0.2 μm was obtained.

The same coating liquid G as that of the cholesteric liquid crystal layer laminated body A was further applied onto a surface of the obtained cholesteric liquid crystal layer using a wire bar, then dried, and heat-treated at 70°C for 1 minute. The resulting product was placed on a hot plate at 75°C and irradiated with ultraviolet light for 6 seconds using an electrodeless lamp (manufactured by Heraeus, D bulb (60 mW/cm)) to fix the cholesteric liquid crystalline phase. Thus, a cholesteric liquid crystal layer having a thickness of 0.6 μm was obtained.

The coating liquid R2 was further applied onto a surface of the obtained cholesteric liquid crystal layer using a wire bar, then dried, and heat-treated at 70°C for 1 minute. The resulting product was placed on a hot plate at 75°C and irradiated with ultraviolet light for 6 seconds using an electrodeless lamp (manufactured by Heraeus, D bulb (60 mW/cm)) to fix the cholesteric liquid crystalline phase. Thus, a cholesteric liquid crystal layer having a thickness of 2.2 μm was obtained.

Thus, a cholesteric liquid crystal layer laminated body B1 (half-mirror film) including a retardation layer and a selectively reflecting layer consisting of three cholesteric liquid crystal layers was obtained.

Production of cholesteric liquid crystal layer laminated body B2

An alignment layer was formed on a surface of the cellulose acylate film 1 subjected to saponification treatment, and rubbing treatment was performed in the same manner as in the cholesteric liquid crystal layer laminated body B1.

The retardation layer-forming coating liquid was applied onto the rubbed surface of the cellulose acylate film 1 using a wire bar, then dried, and heat-treated at 55°C for 1 minute. Subsequently, the cellulose acylate film 1 was placed on a hot plate at 50°C and irradiated with ultraviolet light for 6 seconds using an electrodeless lamp (manufactured by Fusion UV Systems, D bulb (60 mW/cm)) to fix the liquid crystal phase. Thus, a retardation layer having a thickness of 0.8 μm was obtained.

The retardation and the angle of slow axis of the retardation layer were measured with an AxoScan (manufactured by Axometrics). The retardation was 130 nm. The angle of slow axis was +135° with respect to the longitudinal direction of the bright and dark lines of the cellulose acylate film.

The same coating liquid B as that of the cholesteric liquid crystal layer laminated body A was applied onto a surface of the obtained retardation layer using a wire bar, then dried, and heat-treated at 85°C for 1 minute. The resulting product was placed on a hot plate at 50°C and irradiated with ultraviolet light for 6 seconds using an electrodeless lamp (manufactured by Heraeus, D bulb (60 mW/cm)) to fix the cholesteric liquid crystalline phase. Thus, a cholesteric liquid crystal layer having a thickness of 0.2 μm was obtained.

The same coating liquid G as that of the cholesteric liquid crystal layer laminated body A was further applied onto a surface of the obtained cholesteric liquid crystal layer using a wire bar, then dried, and heat-treated at 70°C for 1 minute. The resulting product was placed on a hot plate at 50°C and irradiated with ultraviolet light for 6 seconds using an electrodeless lamp (manufactured by Heraeus, D bulb (60 mW/cm)) to fix the cholesteric liquid crystalline phase. Thus, a cholesteric liquid crystal layer having a thickness of 0.6 μm was obtained.

The coating liquid R2 was further applied onto a surface of the obtained cholesteric liquid crystal layer using a wire bar, then dried, and heat-treated at 70°C for 1 minute. The resulting product was placed on a hot plate at 50°C and irradiated with ultraviolet light for 6 seconds using an electrodeless lamp (manufactured by Heraeus, D bulb (60 mW/cm)) to fix the cholesteric liquid crystalline phase. Thus, a cholesteric liquid crystal layer having a thickness of 2.2 μm was obtained.

Thus, a cholesteric liquid crystal layer laminated body B2 (half-mirror film) including a retardation layer and a selectively reflecting layer consisting of three cholesteric liquid crystal layers was obtained.

Production of cholesteric liquid crystal layer laminated body B3

A cholesteric liquid crystal layer laminated body B3 (half-mirror film) was obtained in the same manner as in the cholesteric liquid crystal layer laminated body B2, except that the coating liquid R2 was changed to the coating liquid R3.

The transmission spectrum of the laminated bodies B1, B2, and B3 was measured with a spectrophotometer (manufactured by JASCO Corporation, V-670). Consequently, a transmission spectrum having selective reflection center wavelengths of 465 nm, 710 nm, and 750 nm was obtained.

Production of heat sealing layer

Heat sealing layer-forming coating liquid 2

The following components were mixed to prepare a heat sealing layer-forming coating liquid 2 having the following composition.

Heat sealing layer-forming coating liquid 2

· S-LEC KS-10 (polyvinyl acetal resin, manufactured by SEKISUI CHEMICAL Co., Ltd.): 4.75 parts by mass
· Silica particle dispersion liquid described above: 5.00 parts by mass
· Solvent (methanol): 40.38 parts by mass
· Solvent (1-butanol): 2.38 parts by mass
· Solvent (methyl acetate): 47.50 parts by mass

Production of heat sealing laminated body (Bh1 to Bh6)

The same heat sealing layer-forming coating liquid 1 as that of the cholesteric liquid crystal layer laminated body A was applied onto a back surface (the surface onto which the cholesteric liquid crystal was not applied) of the cholesteric liquid crystal layer laminated body B1 using a wire bar and then dried. Then, heat treatment was performed at 50°C for 1 minute to form a heat sealing layer having a thickness of 0.5 μm.

Thus, a heat sealing laminated body Bh1 that had a front surface on which the retardation layer and the selectively reflecting layer consisting of three cholesteric liquid crystal layers were formed and that had a back surface on which the heat sealing layer was formed was obtained.

A heat sealing laminated body Bh2 was obtained in the same manner as in the heat sealing laminated body Bh1, except that the heat sealing layer-forming coating liquid 2 was used.

The same heat sealing layer-forming coating liquid 1 as that of the cholesteric liquid crystal layer laminated body A was applied onto a back surface (the surface onto which the cholesteric liquid crystal was not applied) of the cholesteric liquid crystal layer laminated body B2 using a wire bar and then dried. Then, heat treatment was performed at 50°C for 1 minute to form a heat sealing layer having a thickness of 0.5 μm.

Thus, a heat sealing laminated body Bh3 that had a front surface on which the retardation layer and the selectively reflecting layer consisting of three cholesteric liquid crystal layers were formed and that had a back surface on which the heat sealing layer was formed was obtained.

A heat sealing laminated body Bh4 was obtained in the same manner as in the heat sealing laminated body

Bh3, except that the heat sealing layer-forming coating liquid 2 was used.

The same heat sealing layer-forming coating liquid 1 as that of the cholesteric liquid crystal layer laminated body A was applied onto a back surface (the surface onto which the cholesteric liquid crystal was not applied) of the cholesteric liquid crystal layer laminated body B3 using a wire bar and then dried. Then, heat treatment was performed at 50°C for 1 minute to form a heat sealing layer having a thickness of 0.5 μm.

Thus, a heat sealing laminated body Bh5 that had a front surface on which the retardation layer and the selectively reflecting layer consisting of three cholesteric liquid crystal layers were formed and that had a back surface on which the heat sealing layer was formed was obtained.

A heat sealing laminated body Bh6 was obtained in the same manner as in the heat sealing laminated body Bh5, except that the heat sealing layer-forming coating liquid 2 was used.

Production of laminated glass

The heat sealing laminated bodies Bh1 to Bh6 were cut to a size of length 220 mm × width 260 mm so that the longitudinal direction of the bright and dark lines of the cellulose acylate film extended in the longitudinal direction.

The heat sealing laminated bodies Bh1 to Bh6 having a size of length 220 mm × width 260 mm and including a cellulose acylate film whose bright and dark lines were identified were each disposed at the center of the above-described glass plate having a size of length 260 mm × width 300 mm with a thickness of 2 mm and having bright and dark lines identified by a magic mirror method so that the heat sealing layer faced downward. That is, each of the laminated bodies included the glass plate (first glass plate), the transparent support, the retardation layer, and the cholesteric liquid crystal layers disposed in this order.

A PVB film (intermediate film) manufactured by SEKISUI CHEMICAL Co., Ltd. and having a size of length 260 mm × width 300 mm with a thickness of 0.76 mm was disposed on the cholesteric liquid crystal layers of the laminated body. The above-described glass plate (second glass plate) having a size of length 260 mm × width 300 mm with a thickness of 2 mm and having identified bright and dark lines was disposed thereon.

This laminated body was held at 90°C and 10 kPa (0.1 atmospheres) for one hour and then heated in an autoclave (manufactured by KURIHARA SEISAKUSHO Co., Ltd.) at 120°C and 1.3 MPa (13 atmospheres) for 20 minutes to remove air bubbles. Thus, laminated glasses W8 to W13 were obtained.

Herein, the longitudinal directions of the bright and dark lines of the first glass plate, the transparent support, and the second glass plate of the laminated glasses W8 to W13 observed by a magic mirror method were each allowed to be parallel with a plane (incidence plane) formed by light emitted from a light source (imager) for image display and light regularly reflected by the laminated glass in the screen image display system (refer to Fig. 3). It was confirmed in each of the laminated glasses that the angle of slow axis of the retardation layer was +135° with respect to the vertically upward direction of the glass.

For the produced laminated glasses W8 to W13, the distortion of a display image was evaluated in the same manner as in the above-described laminated glasses W1 to W7.

Table 2 shows the results.

Table 2

| Table 2 | Production Example 8 | Production Example 9 | Production Example 10 | Production Example 11 | Production Example 12 | Production Example 13 |
|---|---|---|---|---|---|---|
| Laminated glass | W8 | W9 | W10 | W11 | W12 | W13 |
| Cholesteric liquid crystal layer laminated body | B1 | B1 | B2 | B2 | B3 | B3 |
| Heat sealing layer-forming coating liquid | Coating liquid 1 | Coating liquid 2 | Coating liquid 1 | Coating liquid 2 | Coating liquid 1 | Coating liquid 2 |
| Heat sealing laminated body | Bh1 | Bh2 | Bh3 | Bh4 | Bh5 | Bh6 |
| Second glass | parallel | parallel | parallel | parallel | parallel | parallel |
| Transparent support | parallel | parallel | parallel | parallel | parallel | parallel |

(continued)

| Table 2 | Production Example 8 | Production Example 9 | Production Example 10 | Production Example 11 | Production Example 12 | Production Example 13 |
|---|---|---|---|---|---|---|
| First glass | parallel | parallel | parallel | parallel | parallel | parallel |
| Distortion of display image | A | A | A | A | A | A |

As shown in Production Examples 8 to 13, the screen image display system according to an embodiment of the present invention in which the longitudinal directions of the bright and dark lines obtained by a magic mirror method match each other at the first glass plate, the second glass plate, and the transparent support of the half-mirror film and furthermore the matched longitudinal directions are allowed to be parallel with a plane formed by emitted light of a display image from the screen image display device and reflected light of a display image regularly reflected by the screen image-displaying laminated glass in the screen image display system can display a high-quality screen image without distorting the display image regardless of the type of cholesteric liquid crystal layer laminated body and the type of heat sealingforming coating liquid.

Reference Signs List

10 screen image-displaying laminated glass
12 first glass plate
14 heat sealing layer
16 transparent support
18 retardation layer
20 selectively reflecting layer
24 intermediate film
26 second glass plate

## Claims

**1.** A method for producing a screen image-displaying laminated glass having a half-mirror film that has a transparent support and that has a selectively reflecting layer which wavelength-selectively reflects light, a first glass plate disposed on one surface of the half-mirror film, and a second glass plate disposed on the other surface of the half-mirror film, **characterized in that** the method comprises:
arranging the first glass plate, the second glass plate, and the transparent support so that longitudinal directions of bright and dark lines observed by a magic mirror method in which light emitted from a light source and reflected by an object or light emitted from a light source and transmitted through an object is projected on a light receiving surface match each other at the first glass plate, the second glass plate, and the transparent support, wherein the phrase "the longitudinal directions of bright and dark lines match each other" means that the angle between the two longitudinal directions is 15° or less.

**2.** The method for producing a screen image-displaying laminated glass according to claim 1, wherein the selectively reflecting layer is a cholesteric liquid crystal layer.

**3.** The method for producing a screen image-displaying laminated glass according to claim 1 or 2, wherein the half-mirror film has a retardation layer between the transparent support and the selectively reflecting layer, and the retardation layer has a front retardation of 50 to 180 nm or 250 to 450 nm.

**4.** The method for producing a screen image-displaying laminated glass according to any one of claims 1 to 3, wherein the half-mirror film has a heat sealing layer having a thickness of 0.1 to 50 μm and including a thermoplastic resin on a surface of the transparent support opposite to the selectively reflecting layer.

**5.** The method for producing a screen image-displaying laminated glass according to any one of claims 1 to 4, wherein

an intermediate film is disposed between the half-mirror film and the first glass plate and/or between the half-mirror film and the second glass plate.

**6.** A screen image-displaying laminated glass as obtainable by the method according to any one of claims 1 to 5, comprising:

a half-mirror film having a transparent support and a selectively reflecting layer that wavelength-selectively reflects light;
a first glass plate disposed on one surface of the half-mirror film; and
a second glass plate disposed on the other surface of the half-mirror film,
**characterized in that** longitudinal directions of bright and dark lines observed by a magic mirror method in which light emitted from a light source and reflected by an object or light emitted from a light source and transmitted through an object is projected on a light receiving surface match each other at the first glass plate, the second glass plate, and the transparent support, wherein the phrase "the longitudinal directions of bright and dark lines match each other" means that the angle between the two longitudinal directions is 15° or less.

**7.** The screen image-displaying laminated glass according to claim 6, wherein the selectively reflecting layer is a cholesteric liquid crystal layer.

**8.** The screen image-displaying laminated glass according to claim 6 or 7, wherein the half-mirror film has a retardation layer between the transparent support and the selectively reflecting layer, and the retardation layer has a front retardation of 50 to 180 nm or 250 to 450 nm.

**9.** The screen image-displaying laminated glass according to any one of claims 6 to 8, wherein the half-mirror film has a heat sealing layer having a thickness of 0.1 to 50 μm and including a thermoplastic resin on a surface of the transparent support opposite to the selectively reflecting layer.

**10.** The screen image-displaying laminated glass according to any one of claims 6 to 9, comprising an intermediate film between the half-mirror film and the first glass plate and/or between the half-mirror film and the second glass plate.

**11.** A screen image display system comprising:

the screen image-displaying laminated glass according to any one of claims 6 to 10; and
a screen image display device,
wherein a display image from the screen image display device is caused to enter the screen image-displaying laminated glass and reflected by the screen image-displaying laminated glass to display a screen image,
**characterized in that** matched longitudinal directions of bright and dark lines observed by the magic mirror method at the first glass plate, the second glass plate, and the transparent support of the screen image-displaying laminated glass are parallel with a plane formed by emitted light of the screen image display device and reflected light provided by the screen image-displaying laminated glass as a result of reflection of light of the display image from the screen image display device, wherein "parallel" means that the largest angle between the plane formed by emitted light of the screen image display device and reflected light provided by the screen image-displaying laminated glass and the longitudinal directions of the bright and dark lines at the first glass plate, the second glass plate and the transparent support is 15° or less.

## Patentansprüche

**1.** Verfahren zur Herstellung eines bildschirmbildanzeigenden Verbundglases mit einer Halbspiegelfolie, die einen transparenten Träger und eine selektiv reflektierende Schicht aufweist, die wellenlängenselektiv Licht reflektiert, einer ersten Glasplatte, die auf einer Oberfläche der Halbspiegelfolie angeordnet ist und eine zweite Glasplatte, die auf der anderen Oberfläche der Halbspiegelfolie angeordnet ist,
**dadurch gekennzeichnet, dass** das Verfahren umfasst:
Anordnen der ersten Glasplatte, der zweiten Glasplatte und des transparenten Trägers, so dass die Längsrichtungen von hellen und dunklen Linien, die durch ein magisches Spiegelverfahren beobachtet werden, in dem Licht, das von einer Lichtquelle emittiert und von einem Objekt reflektiert wird, oder Licht, das von einer Lichtquelle emittiert und von einem Objekt transmittiert wird, auf eine Lichtempfangsfläche projiziert wird, an der ersten Glasplatte, der zweiten Glasplatte und dem transparenten Träger übereinstimmen, wobei die Formulierung "die Längsrichtungen

von hellen und dunklen Linien stimmen überein" bedeutet, dass der Winkel zwischen den beiden Längsrichtungen 15° oder weniger beträgt.

2. Verfahren zur Herstellung eines bildschirmbildanzeigenden Verbundglases nach Anspruch 1, wobei die selektiv reflektierende Schicht eine cholesterische Flüssigkristallschicht ist.

3. Verfahren zur Herstellung eines bildschirmbildanzeigenden Verbundglases nach Anspruch 1 oder 2, wobei die Halbspiegelfolie eine Verzögerungsschicht zwischen dem transparenten Träger und der selektiv reflektierenden Schicht aufweist und die Verzögerungsschicht eine Frontverzögerung von 50 bis 180 nm oder 250 bis 450 nm aufweist.

4. Verfahren zur Herstellung eines bildschirmbildanzeigenden Verbundglases nach einem der Ansprüche 1 bis 3, wobei die Halbspiegelfolie eine Heißsiegelschicht mit einer Dicke von 0,1 bis 50 $\mu$m aufweist und ein thermoplastisches Harz auf einer Oberfläche des transparenten Trägers gegenüber der selektiv reflektierenden Schicht aufweist.

5. Verfahren zur Herstellung eines bildschirmbildanzeigenden Verbundglases nach einem der Ansprüche 1 bis 4, wobei eine Zwischenfolie zwischen der Halbspiegelfolie und der ersten Glasplatte und/oder zwischen der Halbspiegelfolie und der zweiten Glasplatte angeordnet wird.

6. Bildschirmbildanzeigendes Verbundglas, erhältlich nach dem Verfahren nach einem der Ansprüche 1 bis 5, umfassend:

   eine Halbspiegelfolie mit einem transparenten Träger und einer selektiv reflektierenden Schicht, die Licht wellenlängenselektiv reflektiert;
   eine erste Glasplatte, die auf einer Oberfläche der Halbspiegelfolie angeordnet ist; und
   eine zweite Glasplatte, die auf der anderen Oberfläche der Halbspiegelfolie angeordnet ist,
   **dadurch gekennzeichnet, dass** Längsrichtungen von hellen und dunklen Linien, die durch ein magisches Spiegelverfahren beobachtet werden, in dem Licht, das von einer Lichtquelle emittiert und von einem Objekt reflektiert wird, oder Licht, das von einer Lichtquelle emittiert und von einem Objekt transmittiert wird, auf eine Lichtempfangsfläche projiziert wird, an der ersten Glasplatte, der zweiten Glasplatte und dem transparenten Träger übereinstimmen, wobei die Formulierung "die Längsrichtungen von hellen und dunklen Linien stimmen überein" bedeutet, dass der Winkel zwischen den beiden Längsrichtungen 15° oder weniger beträgt..

7. Bildschirmbildanzeigendes Verbundglas nach Anspruch 6, wobei die selektiv reflektierende Schicht eine cholesterische Flüssigkristallschicht ist.

8. Bildschirmbildanzeigendes Verbundglas nach Anspruch 6 oder 7, wobei die Halbspiegelfolie eine Verzögerungsschicht zwischen dem transparenten Träger und der selektiv reflektierenden Schicht aufweist und die Verzögerungsschicht eine Frontverzögerung von 50 bis 180 nm oder 250 bis 450 nm aufweist.

9. Bildschirmbildanzeigendes Verbundglas nach einem der Ansprüche 6 bis 8, wobei die Halbspiegelfolie eine Heißsiegelschicht mit einer Dicke von 0,1 bis 50 $\mu$m aufweist und ein thermoplastisches Harz auf einer Oberfläche des transparenten Trägers gegenüber der selektiv reflektierenden Schicht aufweist.

10. Bildschirmbildanzeigendes Verbundglas nach einem der Ansprüche 6 bis 9, umfassend eine Zwischenfolie zwischen der Halbspiegelfolie und der ersten Glasplatte und/oder zwischen der Halbspiegelfolie und der zweiten Glasplatte.

11. Ein Bildschirmanzeigesystem, umfassend:

   das bildschirmbildanzeigende Verbundglas nach einem der Ansprüche 6 bis 10;
   und
   eine Bildschirmanzeigevorrichtung,
   wobei ein Anzeigebild von der Bildschirmanzeigevorrichtung veranlasst wird, in das bildschirmbildanzeigende Verbundglas einzutreten und von dem bildschirmbildanzeigenden Verbundglas reflektiert wird, um ein Bildschirmbild anzuzeigen,
   **dadurch gekennzeichnet, dass** übereinstimmende Längsrichtungen von hellen und dunklen Linien, die durch das magische Spiegelverfahren an der ersten Glasplatte, der zweiten Glasplatte und dem transparenten Träger

des bildschirmbildanzeigenden Verbundglases parallel zu einer Ebene sind, die durch emittiertes Licht der Bildschirmanzeigevorrichtung und reflektiertes Licht, das von dem bildschirmbildanzeigenden Verbundglas bereitgestellt wird, gebildet wird, als Ergebnis einer Reflexion von Licht des Anzeigebildes von der Bildschirmanzeigevorrichtung, wobei "parallel" bedeutet, dass der größte Winkel zwischen der Ebene, die durch emittiertes Licht der Bildschirmanzeigevorrichtung und reflektiertes Licht, das durch das bildschirmbildanzeigende Verbundglas bereitgestellt wird, und den Längsrichtungen der hellen und dunklen Linien an der ersten Glasplatte, der zweiten Glasplatte und dem transparenten Träger 15° oder weniger beträgt.

## Revendications

**1.** Procédé destiné à produire un verre feuillé d'affichage d'image d'écran présentant un film de miroir semi-réfléchissant, lequel présente un support transparent et lequel présente une couche de réflexion sélective, laquelle réfléchit la lumière de manière sélective quant à la longueur d'onde, une première plaque de verre disposée sur une surface du film de miroir semi-réfléchissant, et une seconde plaque de verre disposée sur l'autre surface du film de miroir semi-réfléchissant, **caractérisé en ce que** le procédé comprend les étapes suivantes :
agencer la première plaque de verre, la seconde plaque de verre, et le support transparent de sorte que des directions longitudinales de lignes claires et sombres, observées par un procédé à miroir magique où la lumière émise à partir d'une source lumineuse et réfléchie par un objet ou une lumière émise à partir d'une source lumineuse et transmise à travers un objet est projetée sur une surface de réception de lumière, coïncident entre elles sur la première plaque de verre, la seconde plaque de verre, et le support transparent, et dans lequel l'expression « les directions longitudinales de lignes claires et sombres coïncident entre elles" signifie que l'angle entre les deux directions longitudinales est inférieur ou égal à 15°.

**2.** Procédé destiné à produire un verre feuillé d'affichage d'image d'écran selon la revendication 1, dans lequel la couche à réflexion sélective est une couche de cristaux liquides cholestériques.

**3.** Procédé destiné à produire un verre feuillé d'affichage d'image d'écran selon la revendication 1 ou 2, dans lequel le film de miroir semi-réfléchissant présente une couche de retard entre le support transparent et la couche à réflexion sélective, et la couche de retard présente un retard avant de 50 à 180 nm ou de 250 à 450 nm.

**4.** Procédé destiné à produire un verre feuillé d'affichage d'image d'écran selon l'une quelconque des revendications 1 à 3, dans lequel le film de miroir semi-réfléchissant présente une couche thermoscellable présentant une épaisseur de 0,1 à 50 $\mu$m et incluant une résine thermoplastique sur une surface du support transparent face à la couche à réflexion sélective.

**5.** Procédé destiné à produire un verre feuillé d'affichage d'image d'écran selon l'une quelconque des revendications 1 à 4, dans lequel un film intermédiaire est disposé entre le film de miroir semi-réfléchissant et la première plaque de verre, et/ou entre le film de miroir semi-réfléchissant et la seconde plaque de verre.

**6.** Verre feuillé d'affichage d'image d'écran pouvant être obtenu par le procédé selon l'une quelconque des revendications 1 à 5, comprenant :

un film de miroir semi-réfléchissant présentant un support transparent et une couche de réflexion sélective, laquelle réfléchit la lumière de manière sélective quant à la longueur d'onde ;
une première plaque de verre disposée sur une surface du film de miroir semi-réfléchissant, et
une seconde plaque de verre disposée sur l'autre surface du film de miroir semi-réfléchissant,
**caractérisé en ce que** des directions longitudinales de lignes claires et sombres, observées par un procédé à miroir magique où la lumière émise à partir d'une source lumineuse et réfléchie par un objet ou une lumière émise à partir d'une source lumineuse et transmise à travers un objet est projetée sur une surface de réception de lumière, coïncident entre elles sur la première plaque de verre, la seconde plaque de verre, et le support transparent, et dans lequel l'expression « les directions longitudinales de lignes claires et sombres coïncident entre elles" signifie que l'angle entre les deux directions longitudinales est inférieur ou égal à 15°.

**7.** Verre feuillé d'affichage d'image d'écran selon la revendication 6, dans lequel la couche à réflexion sélective est une couche de cristaux liquides cholestériques.

**8.** Verre feuillé d'affichage d'image d'écran selon la revendication 6 ou 7, dans lequel le film de miroir semi-réfléchissant

présente une couche de retard entre le support transparent et la couche à réflexion sélective, et la couche de retard présente un retard avant de 50 à 180 nm ou de 250 à 450 nm

**9.** Verre feuillé d'affichage d'image d'écran selon l'une quelconque des revendications 6 à 8, dans lequel dans lequel le film de miroir semi-réfléchissant présente une couche thermoscellable présentant une épaisseur de 0,1 à 50 $\mu$m et incluant une résine thermoplastique sur une surface du support transparent face à la couche à réflexion sélective.

**10.** Verre feuillé d'affichage d'image d'écran selon l'une quelconque des revendications 6 à 9, comprenant un film intermédiaire entre le film de miroir semi-réfléchissant et la première plaque de verre, et/ou entre le film de miroir semi-réfléchissant et la seconde plaque de verre.

**11.** Système d'affichage d'image d'écran, comprenant :

le verre feuillé d'affichage d'image d'écran selon l'une quelconque des revendications 6 à 10, et
un dispositif d'affichage d'image d'écran,
dans lequel il est fait en sorte qu'une image d'affichage à partir du dispositif d'affichage d'image d'écran entre dans le verre feuilleté d'affichage d'image d'écran et soit réfléchie par le verre feuilleté d'affichage d'image d'écran afin d'afficher une image d'écran,
**caractérisé en ce que** des directions longitudinales présentant une coïncidence de lignes claires et sombres, observées par un procédé à miroir magique sur la première plaque de verre, la seconde plaque de verre et le support transparent du verre feuilleté d'affichage d'image d'écran, sont parallèles à un plan formé par la lumière émise du dispositif d'affichage d'image d'écran et la lumière réfléchie fournie par le verre feuilleté d'affichage d'image d'écran suite à la réflexion de lumière de l'image d'affichage à partir du dispositif d'affichage d'image d'écran, dans lequel « parallèle » » signifie que le plus grand angle entre le plan formé par la lumière émise du dispositif d'affichage d'image d'écran et la lumière réfléchie fournie par le verre feuilleté d'affichage d'image d'écran et les directions longitudinales des lignes claires et sombres sur la première plaque de verre, la seconde plaque de verre et le support transparent est inférieur ou égal à 15°.

FIG. 1

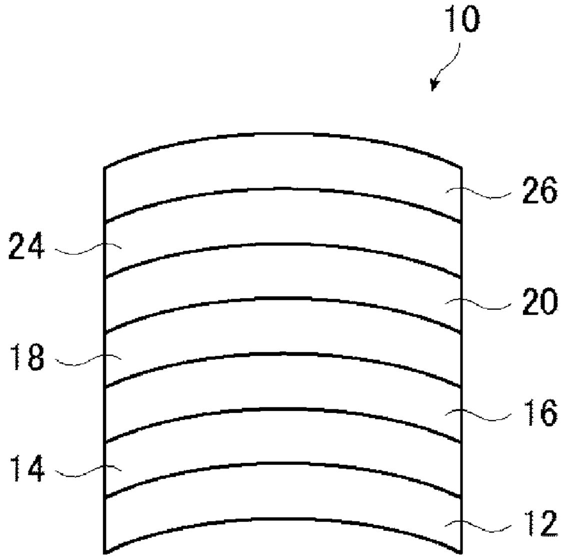


FIG. 2

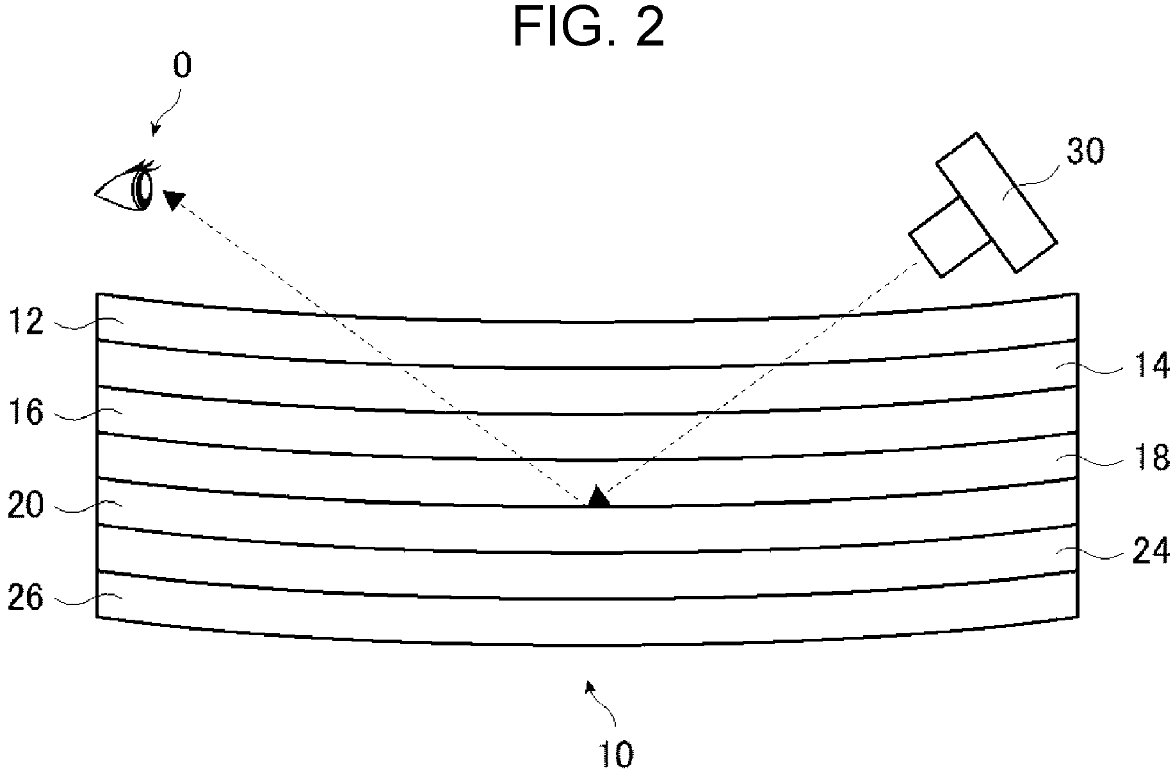

FIG. 3

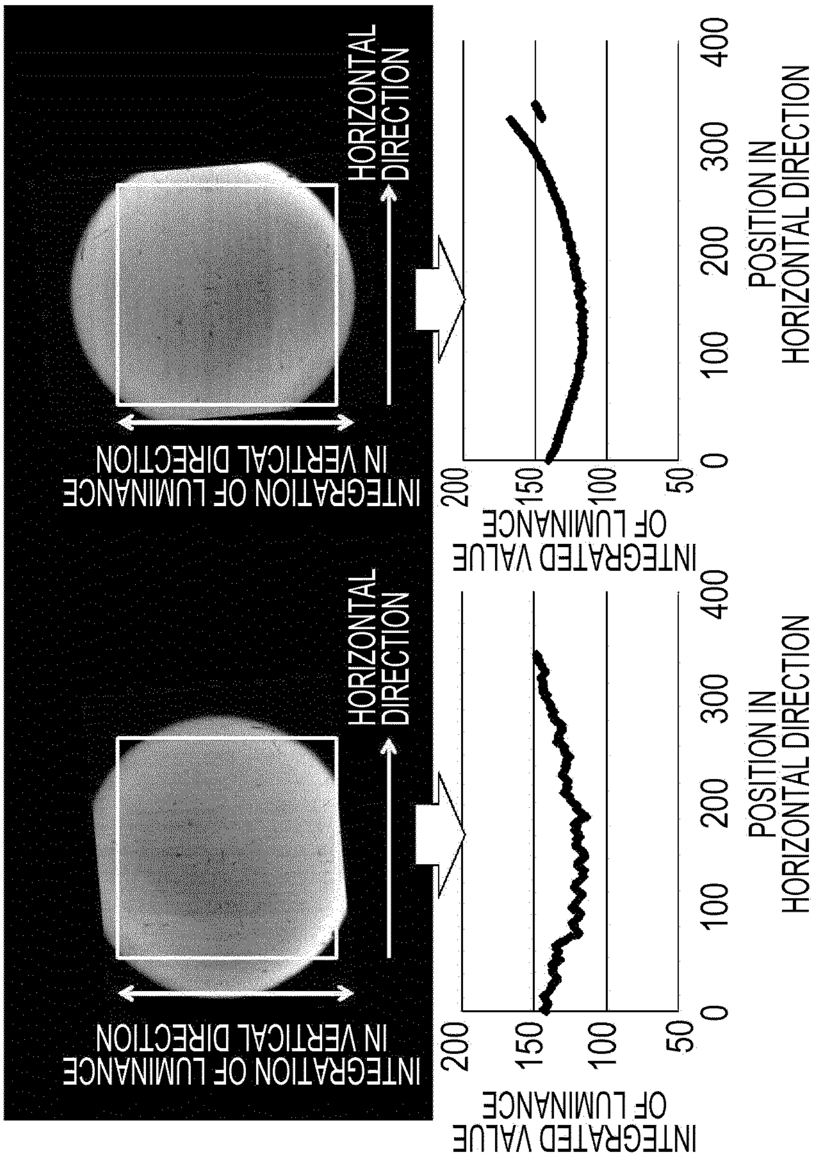
INTEGRATION OF LUMINANCE IN VERTICAL DIRECTION
HORIZONTAL DIRECTION
INTEGRATED VALUE OF LUMINANCE
200
150
100
50
0
100
200
300
400
POSITION IN HORIZONTAL DIRECTION
INTEGRATION OF LUMINANCE IN VERTICAL DIRECTION
HORIZONTAL DIRECTION
INTEGRATED VALUE OF LUMINANCE
200
150
100
50
0
100
200
300
400
POSITION IN HORIZONTAL DIRECTION

FIG. 4

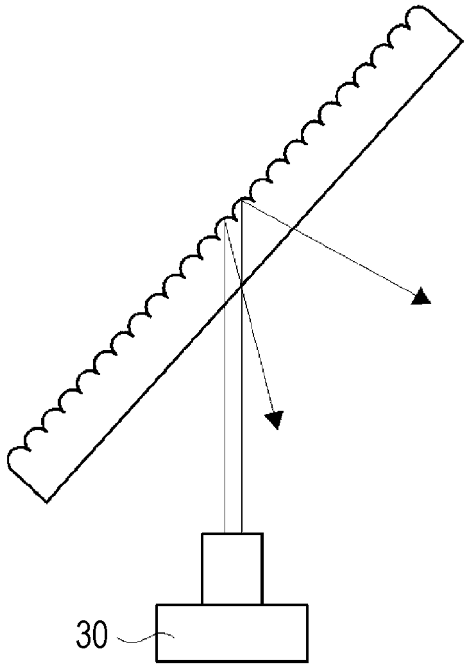
30

FIG. 5

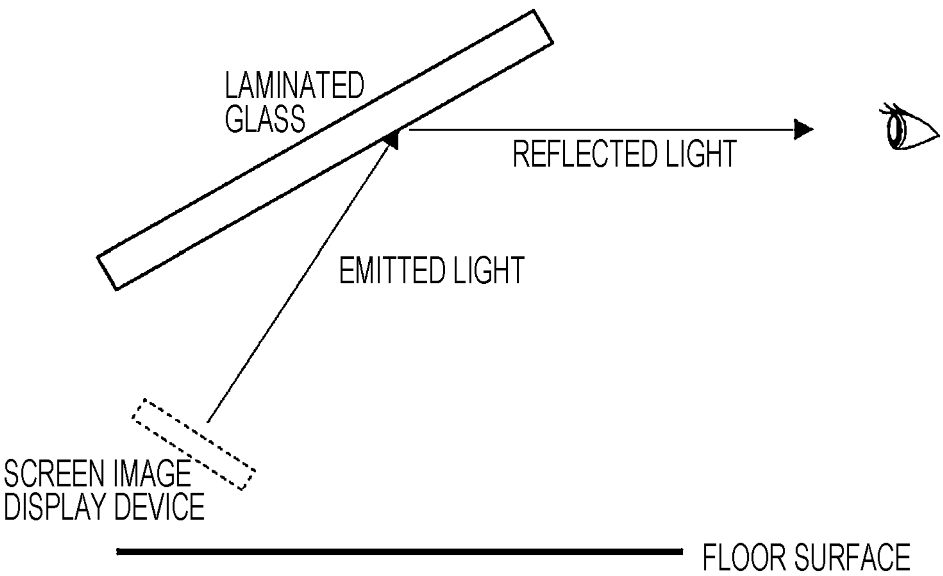
LAMINATED GLASS
REFLECTED LIGHT
EMITTED LIGHT
SCREEN IMAGE DISPLAY DEVICE
FLOOR SURFACE

FIG. 6

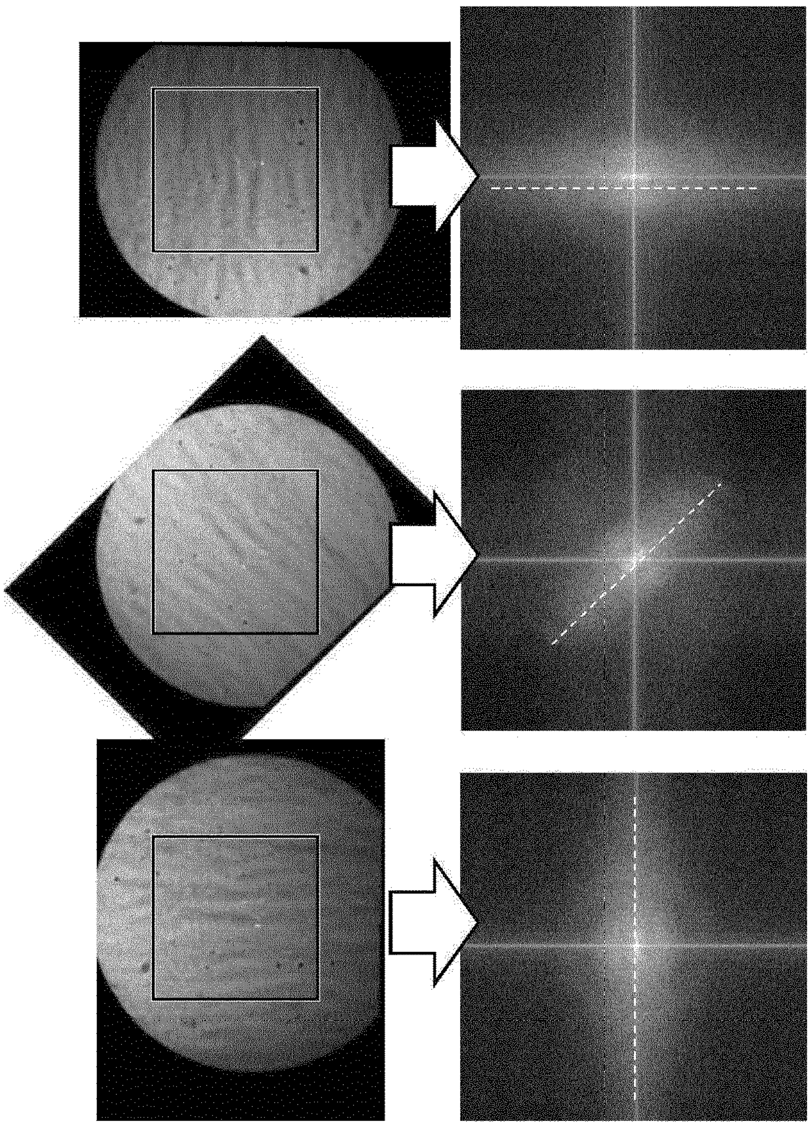

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016052367 A
- US 20170192231 A1
- US 20160257095 A1
- US 4683327 A
- US 5622648 A
- US 5770107 A
- WO 9522586 A
- WO 9524455 A
- WO 9700600 A
- WO 9823580 A
- WO 9852905 A
- JP 1272551 A
- JP HO1272551 A
- JP 6016616 A
- JP H0616616 A
- JP 7110469 A
- JP H07110469 A
- JP 11080081 A
- JP H11080081 A
- JP 2001328973 A
- JP 2003287623 A
- JP 2002302487 A
- JP 2002080478 A
- JP 2002080851 A
- JP 2010181852 A
- JP 2014034581 A
- US 2367661 A
- US 2367670 A
- US 2448828 A
- US 2722512 A
- US 3046127 A
- US 2951758 A
- US 3549367 A
- JP 60105667 A
- US 4239850 A
- JP 63040799 B
- JP 1993 A
- JP 29234 B
- JP H0529234 B
- JP 10095788 A
- JP H1095788 A
- JP 10029997 A
- JP 2001233842 A
- JP 2000080068 A
- JP 2006342166 A
- JP 2013114249 A
- JP 2014 A
- JP 137466 A
- JP 4223071 B
- JP 2010262028 A
- JP 2014500852 A
- JP 2000066385 A
- JP 4454067 B
- US 4212970 A
- JP 2012208494 A
- JP 2007272185 A
- JP 2012203237 A
- JP 2013113913 A
- WO 2018062068 A
- JP 9506837 A
- JP H09506837 A
- JP 2011505330 A
- JP 7270711 A
- JP H07270711 A
- JP 2013228674 A
- JP 2000221449 A
- JP 2012226303 A
- JP 2010145745 A
- JP 2007523369 A
- JP 2141720 A
- JP H02141720 A
- JP 10096874 A
- JP H1096874 A
- JP 2003098470 A
- US 5013134 A
- JP 2006512622 A
- JP 2009150947 A
- JP 2017015902 A
- WO 2014112575 A


### Non-patent literature cited in the description


- **EKISHO KAGAKU ; JIKKEN NYUMON.** Introduction of Liquid Crystal Chemical Experiments. SIGMA SHUPPAN, 2007
- Handbook of Liquid Crystals. Maruzen Co., Ltd, 196
- *Makromol. Chem.,* 1989, vol. 190, 2255
- *Advanced Materials,* 1993, vol. 5, 107
- Liquid Crystal Device Handbook. 1989, 199